(19) **Europäisches Patentamt / European Patent Office / Office européen des brevets**

(11) **EP 3 955 176 B1**

(12) **EUROPEAN PATENT SPECIFICATION**

(45) Date of publication and mention of the grant of the patent:
**04.12.2024 Bulletin 2024/49**

(21) Application number: **20386041.6**

(22) Date of filing: **14.08.2020**

(51) International Patent Classification (IPC):
**G06N 5/025** (2023.01)    **G06N 5/046** (2023.01)
**G06N 7/01** (2023.01)    **G06N 20/00** (2019.01)

(52) Cooperative Patent Classification (CPC):
**G06N 20/00; G06N 5/025; G06N 5/046; G06N 7/01**

(54) **SYSTEM AND METHOD FOR FORECASTING COMPLEX EVENTS**

SYSTEM UND VERFAHREN ZUR VORHERSAGE KOMPLEXER EREIGNISSE

SYSTÈME ET PROCÉDÉ DE PRÉVISION D'ÉVÉNEMENTS COMPLEXES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**16.02.2022 Bulletin 2022/07**

(73) Proprietor: **National Centre for Scientific Research "Demokritos"**
**15341 Agia Paraskevi (GR)**

(72) Inventors:
• **Alevizos, Ilias**
**15310 Aghia Paraskevi (GR)**
• **Ntoulias, Emmanouil**
**15310 Aghia Paraskevi (GR)**
• **Artikis, Alexandros**
**15310 Aghia Paraskevi (GR)**
• **Paliouras, Georgios**
**15310 Aghia Paraskevi (GR)**

(74) Representative: **Käck, Stefan**
**Kahler Käck Mollekopf**
**Partnerschaft von Patentanwälten mbB**
**Vorderer Anger 239**
**86899 Landsberg/Lech (DE)**

(56) References cited:
**EP-A1- 2 560 106**

• **ELIAS ALEVIZOS ET AL: "Wayeb: a Tool for Complex Event Forecasting", ARXIV.ORG, CORNELL UNIVERSITY LIBRARY, 201 OLIN LIBRARY CORNELL UNIVERSITY ITHACA, NY 14853, 16 December 2018 (2018-12-16), XP081001005, DOI: 10.29007/2S9T**
• **ELIAS ALEVIZOS ET AL: "Event Forecasting with Pattern Markov Chains", ARXIV.ORG, CORNELL UNIVERSITY LIBRARY, 201 OLIN LIBRARY CORNELL UNIVERSITY ITHACA, NY 14853, 27 April 2018 (2018-04-27), XP081407475, DOI: 10.1145/3093742.3093920**
• **ELIAS ALEVIZOS ET AL: "Symbolic Automata with Memory: a Computational Model for Complex Event Processing", ARXIV.ORG, CORNELL UNIVERSITY LIBRARY, 201 OLIN LIBRARY CORNELL UNIVERSITY ITHACA, NY 14853, 26 April 2018 (2018-04-26), XP081230332**
• **JEN LAJOS ET AL: "Predictive Complex Event Processing: A Conceptual Framework for Combining Complex Event Processing and Predictive Analytics", 20 September 2012 (2012-09-20), pages 1 - 6, XP055775120, Retrieved from the Internet <URL:https://dl.acm.org/doi/pdf/10.1145/2371316.2371323?casa_token=Cs2_9mxjC7EAAAAA:b0rjElfk0A1uPWiPpSh3-y53BPMASjlshoex9OSfd9VK6nQdKu-jV5n7EDYqQNH_VZ5-vKL7lj0> [retrieved on 20210211]**

**Description**

TECHNICAL FIELD

The present invention relates to complex event forecasting. More particular, it relates to a method and a system which allow a user to define a pattern for a complex event and then construct a probabilistic model for it in order to forecast, while consuming a stream of events, if and when a complex event is expected to occur.

BACKGROUND

The avalanche of real-time data in the last decade has sparked an interest in fields focused on processing high-velocity data streams. Complex Event Recognition (CER) is one of these fields which have enjoyed increased popularity. The main goal of a CER system is to detect interesting activity patterns occurring within a real-time stream of events, coming, e.g., from sensors or other devices.

The input to a CER system comprises two main components: a stream of events, also called simple events (SEs), and a set of patterns that define relations among the SEs and must be detected upon the input stream. Instances of pattern satisfaction are called complex events (CEs). The output of the CER system is another stream, composed of the detected CEs. It is typically required that CEs must be detected with very low latency, which, in certain cases, may even be in the order of a few milliseconds.

For example, a CER system can receive an input stream consisting of events emitted from vessels sailing at sea. The events may contain information regarding the status of the vessel. An analyst may be interested to detect several activity patterns for monitored vessels, such as sudden changes in the kinematic behavior of a vessel (e.g., sudden accelerations), sailing in restricted areas, etc. Respective patterns are first defined and then used by a computational model applied on the stream of events to detect CEs.

In many situations it is however not sufficient to detect CEs based on predefined patterns. Often it is necessary to forecast if and when a complex event might occur in a real-time stream of events, while consuming the stream and before such an occurrence is actually (or can be) detected by a CER system. It is therefore desired to endow complex event processing systems with forecasting capabilities.

There are multiple ways to define the task of "forecasting" over time-evolving data streams. The terms "forecasting" and "prediction" are often used interchangeably as equivalent terms. For reasons of clarity, the term "forecasting" is used in the present document, since there does exist a conceptual difference between forecasting and prediction, as the latter term is understood in machine learning. In machine learning, the goal is to "predict" the output of a function on previously unseen input data. The input data need not necessarily have a temporal dimension and the term "prediction" refers to the output of the learned function on a new data point. For this reason the term "prediction" is avoided in the present document. Instead, the term "forecasting" or "forecast" is chosen to define the task of predicting the temporally future output of some function or the occurrence of an event. Time is thus a crucial component for forecasting. Moreover, an important challenge stems from the fact that, from the (current) time point where a forecast is produced until the (future) time point for which a forecast is made, no data is available. A forecasting system must (implicitly or explicitly) fill in this data gap in order to produce a forecast, whereas in a typical machine learning task a prediction can be made using all available data that refer to the target point of the prediction.

Some systems and methods for forecasting future behavior of event streams are known in the art. For example, European Patent No. 2 560 106 relates to forecasting the future behavior of event streams in complex event processing environments. While events stream in, new forecasts are automatically computed with respect to a continuously or discontinuously moving time window. The forecast may then estimate on the basis of the movable window the future values and the time they will occur. The forecasting framework may be flexibly defined and parameterized to allow for a tailored adaptation in certain implementations.

Further, the scientific paper "Event Forecasting with Pattern Markov Chains" by Elias Alevizos et al. relates to event forecasting with Pattern Markov Chains. The described system consumes streams of events and forecasts when a pattern - given in the form of a regular expression - is expected to be fully matched. As more events are consumed, the system revises its forecast to reflect possible changes in the state of the pattern. The framework of Pattern Markov Chains is used to learn a probabilistic model for the pattern, with which forecasts with guaranteed precision may be produced, in the form of intervals within which a full match is expected.

The scientific paper "Symbolic Automata with Memory: a Computational Model for Complex Event Processing" by Elias Alevizos et al. describes an automaton model which is a combination of symbolic and register automata, i.e., a symbolic automata is enriched with memory. The automata are called Register Match Automata (RMA). RMA extend the expressive power of symbolic automata, by allowing Boolean formulas to be applied not only to the last element read from an input string, but to multiple elements, stored in their registers. RMA also extend register automata, by allowing arbitrary Boolean formulas, besides equality predicates.

It is desirable to provide an improved implementation for a complex event forecasting system which allows forecasting with high accuracy and/or low latency if and when a complex event will probably occur in a stream of events, before the event is actually detected.

## SUMMARY

The invention is defined in the appended independent claims. Particular embodiments are set out in the dependent claims.

In particular, the present invention provides a method for forecasting complex events (CE) in a complex event forecasting (CEF) system. A pattern defining a complex event is received or obtained. The pattern may define the complex event in a declarative manner. Further, an event stream including a plurality of events is received or obtained. A forecast of the complex event is based upon the received event stream. A probabilistic model is then constructed in order to forecast if and when a complex event is expected to occur in the event stream. An automaton derived from the received pattern and a variable-order Markov model are employed for constructing the probabilistic model and/or are part of the probabilistic model. Based on the received event stream, a complex event is then forecasted by means of the probabilistic model. The forecasted complex event satisfies the received pattern (i.e., it fully matches the received pattern). The result of the forecast is output with a guaranteed precision, in the form of intervals within which the complex event is expected.

The pattern may define relations among one, two, three or more events included in the event stream and/or may define the complex event in a declarative manner (i.e., by a declarative language). Complex events may refer to correlations between one or more events of the plurality of events in the event stream. For example, complex events in the event stream as defined by the pattern represent situations of particular interest in the event stream (e.g., interesting activity patterns).

The method may consume the event stream. Events of the event stream may be received in the form of a plurality of tuples. Each tuple includes one or more numerical and/or categorical values. Further, the event stream may be a continuous or time-evolving event stream. Additionally or alternatively, the event stream may have a temporal dimension. For example, the event stream may be a constantly updated event stream 5 which has the form of an infinite sequence $S = t_1, t_2, ...,$ where each $t_i$ is a tuple. The goal of the method thus is to report the index i at which a CE matching the received pattern is expected.

The probabilistic model for forecasting the complex event comprises the automaton and the variable-order Markov model. The method also converts the received pattern to the automaton. Certain features may then be extracted from the automaton. Further, the variable-order Markov model is generated to encode statistical properties of at least a portion of the received event stream. The variable-order Markov model is then combined with the automaton in a way that makes it possible to derive a probabilistic description of the combined automaton. The probabilistic description is used to derive the actual forecast. The combined automaton thus represents a computational model for determining complex events.

Variable-order Markov models are Markov models whose order (i.e., how deep into the past they can look for dependencies) can be increased beyond what is possible with full-order Markov models. Variable-order Markov models can do this by avoiding a full enumeration of every possible dependency and focusing only on "meaningful" dependencies.

Let $\Sigma$ denote an alphabet, $\sigma \in \Sigma$ a symbol from that alphabet and $s \in \Sigma^m$ a string from that alphabet of length $m$. For full-order Markov models, the predictor $\hat{P}$ is derived through learning conditional distributions $\hat{P}(\sigma \mid s)$, where $m$ is constant and equal to the assumed order of the Markov model. Variable-order Markov models (VMMs), on the other hand, learn such conditional distributions by relaxing the assumption of $m$ being fixed. The length of the context $s$ (as it is often called) may vary, up to a maximum order $m_{max}$, according to the statistics of the training dataset. By looking deeper into the past only when it is statistically meaningful, VMMs can capture both short- and long-term dependencies.

As mentioned above, the complex event is forecast based on the probabilistic model. That means that the method forecasts, while consuming the event stream, if and when a complex event is expected to occur before the complex event is received as part of the received event stream and before it actually occurs in the event stream. It is clear that the method forecasts possible complex events in the event stream only with a certain certainty, but cannot guarantee the occurrence of the complex event in the event stream.

As a result, the method thus forecasts if and when a complex event, defined through the received pattern, will possibly occur in the event stream before it is actually detectable by a CER system.

The steps of the method may be performed by the CEF system.

The described method has numerous advantages over previous approaches.

By using a variable-order Markov model as part of the probabilistic model, the method offers higher quality forecast capabilities. In particular, variable-order Markov models have the advantage that they can look deeper into the past in order to uncover longer probabilistic dependencies in the event stream that affect the probability of encountering a complex event in the future. This allows providing a forecast with a higher accuracy (i.e., higher Matthews correlation coefficient scores or higher AUC (area under curve) for ROC curves). Moreover, no fixed-length window of past data must be maintained. The length of the context/window of past data is dynamically adapted.

At the same time, a variable-order Markov model only retains those states that are "informative" enough. The variable-order Markov model automatically learns which features are the most informative and must be included in the probabilistic model. Compared to a full order Markov model, the number of states is therefore reduced so that necessary computational resources for forecasting complex events are minimized or at least reduced compared to a full order Markov model.

The described method also has the advantage that multiple types of forecasting tasks can be performed in a highly efficient manner (i.e., higher throughput by processing more events per second).

Consequently, even in cases in which the accuracy of the method with the variable-order Markov model is comparable to that of a full-order Markov model, the method with the variable-order Markov model typically has better training times and throughput performance (when used in a streaming setting).

The described method also requires minimal intervention by the user. A given pattern is defined and the pattern is subsequently automatically translated to an automaton and used in combination with the Markov model. Thus, the described method is able to seamlessly construct a probabilistic model from a given (declaratively defined) complex event pattern, without requiring extensive domain knowledge. The method is thus versatile, highly adaptable, and can be applied in many different areas.

The automaton derived from the received pattern is a deterministic symbolic finite automaton (DSFA) and/or the received pattern is defined by a symbolic regular expression (SRE) and is convertible to a deterministic symbolic finite automaton.

The main idea behind symbolic automata is that each transition, instead of being labeled with a symbol from an alphabet, is equipped with a unary formula from an effective Boolean algebra. A symbolic automaton can then read strings of elements and, upon reading an element while in a given state, can apply predicates of this state's outgoing transitions to that element. The transitions whose predicates evaluate to *TRUE* are said to be "enabled" and the automaton moves to their target states.

As with classic regular expressions and automata, every symbolic regular expression can be translated to an equivalent symbolic finite automaton (i.e., to a symbolic finite automaton with the same language $\mathcal{L}$). That means that for every symbolic regular expression R there exists a symbolic finite automaton M such that $\mathcal{L}(R) = \mathcal{L}(M)$.

$$(\mathcal{D}, \Psi, [\![\_]\!], \bot, \top, \vee, \wedge, \neg)$$

An effective Boolean algebra is a tuple where

- $\mathcal{D}$ is a set of domain elements;
- $\Psi$ is a set of predicates closed under the Boolean connectives;
- $\bot, \top \in \Psi$;
- the component $[\![\_]\!] : \Psi \to 2^{\mathcal{D}}$ is a denotation function such that

  - $[\![\bot]\!] = \emptyset$,
  - $[\![\top]\!] = \mathcal{D}$, and
  - $\forall \phi, \psi \in \Psi$:

    -
$$[\![\phi \vee \psi]\!] = [\![\phi]\!] \cup [\![\psi]\!]$$

    -
$$[\![\phi \wedge \psi]\!] = [\![\phi]\!] \cap [\![\psi]\!]$$

    -
$$[\![\neg\phi]\!] = \mathcal{D} \backslash [\![\phi]\!]$$

It is also required that checking satisfiability of $\Phi$, i.e., whether $[\![\phi]\!] \neq \emptyset$, is decidable and that the operations of $\vee$, $\wedge$, and $\neg$ are effectively computable.

For Boolean algebras, elements of D are called "characters" and finite sequences of characters are called "strings". A set of strings $\mathcal{L}$ constructed from the elements of $\mathcal{D}$ ($\mathcal{L} \subseteq \mathcal{D}^*$, where * denotes Kleene-star) is called a "language over D".

As with classical regular expressions, symbolic regular expressions can be used to represent a class of languages over D.

A symbolic regular expression over an effective Boolean algebra (D, $\Psi$, $[\![\_]\!]$ , 1 , T, V, $\wedge$, $\neg$) is recursively defined as follows:

- The constants $\varepsilon$ and Ø are symbolic regular expressions with $\mathcal{L}(\varepsilon) = \{\varepsilon\}$ and $\mathcal{L}(\emptyset) = \{\emptyset\}$.

- If $\psi \in \Psi$, then $R := \psi$ is a symbolic regular expression with $\mathcal{L}(\psi) = [\![\psi]\!]$ , i.e., the language of $\psi$ is the subset of $\mathcal{L}$ for which $\psi$ evaluates to *TRUE.*

- If $R_1$ and $R_2$ are symbolic regular expressions, then R := $R_1$ + $R_2$ is also a symbolic regular expression, with $\mathcal{L}(R)$ = $\mathcal{L}(R_1) \cup \mathcal{L}(R_2)$.

- If $R_1$ and $R_2$ are symbolic regular expressions, then R := $R_1 \cdot R_2$ is also a symbolic regular expression, with $\mathcal{L}(R)$ = $\mathcal{L}(R_1) \cdot \mathcal{L}(R_2)$, where · denotes concatenation. $\mathcal{L}(R)$ is then the set of all strings constructed from concatenating each element of $\mathcal{L}(R_1)$ with each element of $\mathcal{L}(R_2)$.

- If R is a symbolic regular expression, then $R' := R^*$ is a symbolic regular expression, with L(R*) = (L(R))*, where $L^*$ = $\cup_{i \geq 0} L^i$ and $L^i$ is the concatenation of L with itself *i* times.

Given a Boolean algebra, symbolic automata can be defined. The definition for a symbolic finite automaton is a tuple $M = (\mathcal{A}, Q, q^s, F, \Delta)$, where

- $\mathcal{A}$ is an effective Boolean algebra;
- $Q$ is a finite set of states;
- $q^s \in Q$ is the initial state;
- $Q^f \subseteq Q$ is the set of final states;
- $\Delta \subseteq Q \times \Psi_{\mathcal{A}} \times Q$ is a finite set of transitions.

A string w = $a_1 a_2 a \dots a_k$ is accepted by a symbolic finite automaton M if, and only if, for $1 \leq i \leq k$, there exist transitions $q_{i-1} \xrightarrow{a_i} q_i$ such that $q_0 = q^s$ and $q_k \in Q^f$. The set of strings accepted by M is the language of M, denoted by $\mathcal{L}(M)$.

The advantage of symbolic expressions and automata is that, contrary to other automata-based CER models, symbolic expressions and automata have closure properties and clear, compositional semantics.

In some embodiments, the symbolic regular expression is a streaming regular expression (sSRE) and/or the symbolic finite automaton is a streaming finite symbolic automaton (sSFA).

The method may process continuously updated streams of events and detect instances of symbolic regular expression satisfaction as soon as they appear in the streams. In order to accommodate this scenario, the symbolic regular expression and the symbolic finite automaton may work in a streaming setting. For example, the automaton of a (classical) regular expression a · a would accept only the string a, b. In a streaming setting, it is however necessary that an automaton reports a match every time this string appears in a stream. For the stream *a, b, c, a, b, c,* it thus is expected that two matches would be reported, one after the second symbol and one after the firth.

In this scenario, events come in the form of tuples with both numerical and categorical values. As discussed above, the stream *S* then has the form of an infinite sequence $S = t_1, t_2, \dots$, where each $t_i$ is a tuple ($t_i \in \mathcal{D}$) and the method reports the indexes *i* at which a CE is detected. More precisely, if $S_{1..k} = \dots, t_{k-1}, t_k$ is the prefix of 5 up to the index *k,* an instance of a SRE R is detect at *k* if, and only if, there exists a suffix $S_{m..k}$ of $S_{1..k}$ such that $S_{m..k} \in \mathcal{L}(R)$. In order to detect CEs of a SRE R on a stream, a streaming version of SRE and SFA is used.

If R is a SRE, then $R_S = T^* \cdot R$ is called the streaming SRE (sSRE) corresponding to SRE corresponding to R. A symbolic finite automaton $M_{R_S}$ constructed from $R_S$ is called a streaming SFA (sSFA) corresponding to *R.*

Using the streaming SRE $R_S$ CEs of R can be detected while consuming a stream S, since a stream segment $S_{m..k}$ is recognized by R if, and only if, the prefix $S_{1..k}$ is recognized by $R_S$. The prefix T* allows skipping any number of events from the stream and start recognition at any index *m*, $1 \leq m \leq k$. That means that if $S = t_1, t_2, \dots$ is a stream of domain elements from an effective Boolean algebra $\mathcal{A} = (\mathcal{D}, \Psi, [\![\_]\!], \perp, \top, V, \wedge, \neg)$ ($t_i \in \mathcal{D}$) and R is a symbolic regular expression over the same algebra, then, for every $S_{m..k}$, $S_{m..k}$ E $\mathcal{L}(R)$ if, and only if, $S_{1..k}$ E $\mathcal{L}(R_s)$ (and $S_{1..k}$ $\in \mathcal{L}(M_{R_s})$).

As an example, if $R := (speed < 5) \cdot (speed > 20)$ is the pattern for sudden accelerations, then its sSRE would be $R' := \tau^* \cdot (speed < 5) \cdot (speed > 20)$.

The streaming behavior of a sSFA as it consumes a stream 5 can be described through the notation of configuration. Assume $S = t_1, t_2, ...$ is a stream of domain elements from an effective Boolean algebra, R is a symbolic regular expression over the same algebra and $M_{R_s}$ a sSFA corresponding to R. A configuration c of $M_{R_s}$ is a tuple $[i, q]$, where $i$ is the current position of the stream (i.e., the index of the next event to be consumed) and $q$ the current state of $M_{R_s}$. Under these assumptions, $c' = [i', q']$ is a successor of c if, and only if, $\exists \delta$ E $M_{R_s}$. $\Delta$:

$$\delta = (q, \psi, q') \wedge (t_i \in [\![\psi]\!] \vee \psi = \epsilon)$$ ; and $i = i'$ if $\delta = \varepsilon$. Otherwise, $i' = i + 1$. A succession is denoted by

$$[i, q] \xrightarrow{\delta} [i', q']$$.

For the initial configuration $c^s$, before consuming any events, $i = 1$ and $c^s.q = M_{R_s}. q^s$, i.e., the state of the first configuration is the initial state of $M_{R_s}$. In other words, for every index $i$, we move from our current state $q$ to another state $q'$ if there is an outgoing transition from $q$ to $q'$ and the predicate on this transition evaluates to *TRUE* for $t_i$. Then, the reading position is increased by 1. Alternatively, if the transition is an $\varepsilon$-transition, the reading position is moved to $q'$ without increasing the reading position.

The actual behavior of a sSFA upon reading a stream is captured by the notion of the run. A run $\varrho$ of a sSFA M over a stream $S_{1..k}$ is a sequence of successor configurations

$$[1, q_1 = M. q^s] \xrightarrow{\delta_1} [2, q_2] \xrightarrow{\delta_2} ... \xrightarrow{\delta_k} [k + 1, q_{k+1}]$$. A run is called accepting if, and only if, $q_{k+1}$ E M. $Q^f$.

It is easy to see that a run $\varrho$ of a sSFA $M_{R_s}$, over a stream $S_{1..k}$ is accepting if, and only if, $S_{1..k} \in \mathcal{L}(R_s)$, since $M_{R_s}$, after reading $S_{1..k}$ must have reached a final state. Therefore, for a sSFA that consumes a stream, the existence of an accepting run with configuration k + 1 implies that a CE for the SRE R has been detected at the stream index k.

In some embodiments, a prediction suffix tree (PST) is used as the variable-order Markov model. The predication suffix tree encodes statistical properties of at least a portion of the received event stream which acts as a training dataset.

The prediction suffix tree may be used to learn the probabilistic model from the received event stream. Prediction suffix trees have the advantage that after they are learned, they can be readily converted to a probabilistic automaton, which can then be combined with a symbolic automaton. More precisely, a probabilistic suffix automaton (PSA) is learnt, whose states correspond to contexts of variable length and the outgoing transitions from each state encode the conditional distribution of seeing a symbol given the context of that state.

The definition for a prediction suffix tree is as follows: Let $\Sigma$ be an alphabet. A PST T over $\Sigma$ is a tree whose edges are labeled by symbols $\sigma$ E $\Sigma$ and each internal node has exactly one edge for every $\sigma$ E $\Sigma$ (hence, the degree is $|\Sigma|$). Each node is labeled by a pair (s; $\gamma_s$), where s is the string associated with the walk starting from that node and ending in the root, and $\gamma_s$: $\Sigma$ -> [0,1] is the next symbol probability function related with s. For every string s labeling a node, $\Sigma_{\sigma \in \Sigma} \gamma_s (\sigma) = 1$.

The definition for a probabilistic suffix automaton (PSA) is the following: A probabilistic suffix automaton M is a tuple $(Q, \Sigma, \tau, \gamma, \pi)$, where:

- $Q$ is a finite set of states;
- $\Sigma$ is a finite alphabet;
- $\tau$: $Q \times \Sigma$ -> $Q$ is the transition function;
- $\gamma$: $Q \times \Sigma$ -> [0,1] is the next symbol probability function; and
- $\pi$: $Q$ -> [0,1] is the initial probability distribution over the starting states.

The following conditions must hold:

- For every $q$ E $Q$, it must hold that $\Sigma_{\sigma \in \Sigma} \gamma (q, \sigma) = 1$ and $\Sigma_{q \in Q} \pi (q) = 1$.
- Each $q$ E $Q$ is labeled by a string s E $\Sigma^*$ and the set of labels is suffix free, i.e., no label s is a suffix of another label $s'$.
- For every two states $q_1, q_2 \in Q$ and for every symbol $\sigma$ E $\Sigma$, if $\tau(q_1, \sigma) = q_2$ and $q_1$ is labeled by $s_1$, then $q_2$ is labeled by $s_2$, such that $s_2$ is a suffix of $s_1 \cdot \sigma$.

- For every s labeling some state $q$, and every symbol $\sigma$ for which $\gamma(q, \sigma) > 0$, there exists a label which is a suffix of s · σ.
- The graph of M is strongly connected.

A PSA does not act as an acceptor (i.e., there are no final states), but may act as a generator of strings. It can use $\pi$, its initial distribution on states, to select an initial state and generate its label as a first string and then continuously use $\gamma$ to generate a symbol, move to a next state and repeat the same process. At every time, the label of its state is always a suffix of the string generated thus far. It is also clear that a PSA is a Markov chain as well. $\tau$ and $\gamma$ can be combined into a single function, ignoring the symbols, and this function, together with the first condition, would define a transition matrix of a Markov chain. The last condition about M being strongly connected also ensures that the Markov chain is composed of a single recurrent class of states.

A PSA may also be used to read a string or stream of symbols. In this mode, the state of the PSA at every moment corresponds again to a suffix of the stream and the PSA can be used to calculate the probability of seeing any given string in the future, given the label of its current state. It is intended to use this derived PSA to process streams of symbols, so that, while consuming a stream $S_{1..k}$, it is known what its meaningful suffix are and use that suffix for any inferences.

A PST whose leaves are all of equal depth m corresponds to a full-order Markov model of order m, as its paths from the root to the leaves correspond to every possible context of length m. The goal is therefore to incrementally learn a PST $\hat{T}$ by adding new nodes only when it is necessary and then use $\hat{T}$ to construct a PSA $\hat{M}$ that would be close enough to the actual PSA M that has generated the training data. For example, a learning algorithm may start with a tree having only a single node, corresponding to the empty string $\varepsilon$. Then, it decides whether to add a new context/node s by checking two conditions that must hold:

- there must exist $\sigma \in \Sigma$ such that $\hat{P}(\sigma \mid s) > \theta_1$ must hold, i.e., σ must appear "often enough" after s;

$$\frac{\hat{P}(\sigma \mid s)}{\hat{P}(\sigma \mid suffix(s))} > \theta_2$$

must hold, i.e., it is "meaningful enough" to expand to s because there is a significant difference in the conditional probability of σ given s with respect to the same probability given the shorter context *suffix(s)*.

The thresholds $\theta_1$ and $\theta_2$ depend, among others, on an approximation parameter $\varepsilon$, meaning how close the estimated PSA $\hat{M}$ should be compared to M, on n, denoting the maximum number of states that we allow $\hat{M}$ to have and on $m_{max}$, denoting the maximum order/length of the dependencies to be captured. After a PST $\hat{T}$ has been learned, it is converted to a PSA $\hat{M}$ as described above.

The prediction suffix tree is a preferred example for a variable-order Markov model. Alternative examples for Markov models of variable order may be prediction by partial matching (PPM) or context tree weighting (CTW).

The pattern is received in a form of a symbolic regular expression (SRE) or the received pattern is convertible into a SRE. In these cases, the construction of the probabilistic model comprises the steps of: constructing a streaming finite symbolic automaton (sSFA) based on and/or equivalent to the SRE as described above; constructing a deterministic symbolic finite automaton (DSFA) based on and/or equivalent to the streaming finite symbolic automaton; using minterms of the DSFA and at least a portion of the received event stream as training dataset to learn a probabilistic suffix automaton (PSA), the PSA encoding statistical properties of the portion of the received event stream; and combining the DSFA with the PSA into a single automaton embedding the DSFA and the PSA.

That means, initially a SRE R and a training stream 5 (e.g., as part of the event stream) is received. The SRE R is first used to construct an equivalent sSFA. This sSFA is then determinized into a DSFA $M_R$. $M_R$ can be used to perform recognition on any given stream, but cannot be used for any probabilistic inferences. The next step is therefore to use the minterms of $M_R$ (acting as "symbols") and the training stream 5 to learn a PSA $M_S$ which encodes the statistical properties of S, but has no knowledge of the structure of R (it only knows its minterms). PSA $M_S$ is not an acceptor and cannot be used for recognition. At this point, there are two different automata, $M_R$ for recognition, and $M_S$, describing the properties of the training dataset. $M_R$ and $M_S$ then may be combined into a single automaton M that has the power of both $M_R$ and $M_S$ and can be used both for recognition and for inferring, according to the properties of S, when a CE of R will be detected. In other words, M is the embedding of $M_S$ in $M_R$.

The definition of a DSFA is similar to that for classic deterministic automata. A SFA M is deterministic if, for all transitions (q, $\psi_1$, $q_1$), (q, $\psi_2$, $q_2$) ∈ M. Δ, if $q_1 \neq q_2$ then $[\![\psi_1 \wedge \psi_2]\!] = \emptyset$. That means that for every state and every tuple/character, the deterministic SFA can move to at most one next state upon reading that tuple/character. Since two predicates may be different, but still evaluate to *TRUE* for the same tuple, it is important that the definition for a DSFA also takes this into account.

Using this definition for a DSFA it can be shown that SFAs are indeed closed under determinization. The determinization process first needs to create the minterms of the predicates of a SFA M (i.e., the set of maximal satisfiable Boolean combinations of such predicates), denoted by *Minterms(Predicates($M_S$))*, and then use these minterms as guards for the DSFA.

There are two factors that can lead to a combinatorial explosion of the number of states of the resulting DSFA: first, the fact that the powerset of the states of the original SFA must be constructed (similarly to classical automata); second, the fact that the number of minterms (and, thus, outgoing transitions from each DSFA state) is an exponential function of the number of the original SFA predicates. In order to mitigate this doubly exponential cost, two optimization techniques may be used. Instead of constructing the powerset of states of the SFA and then adding transitions, the states of the DSFA are constructed incrementally, starting from its initial state, without adding states that will be inaccessible in the final DSFA. Further, the number of minterms may be reduced by taking advantage of some previous knowledge about some of the predicates. In cases where it is known that some of the predicates are mutually exclusive, i.e., at most one of them can evaluate to TRUE, then some minterms can be discarded and some others can be simplified.

A DSFA always has an equivalent (through an isomorphism) deterministic classical automaton. Minterms(Predicates(M)) induces a finite set of equivalence classes on the (possibly infinite) set of domain elements of M. For example, if *Predicates(M)* = $\{\psi_1, \psi_2\}$, then *Minterms(Predicates(M))* = $\{\psi_1 \wedge \psi_2, \psi_1 \wedge \neg \psi_2, \neg \psi_1 \wedge \psi_2, \neg \psi_1 \wedge \neg \psi_2\}$ and each domain element, which is a tuple, can be mapped to exactly one of these 4 minterms: the one that evaluates to TRUE when applied to the element. Similarly, the set of minterms induces a set of equivalence classes on the set strings (i.e., event streams). For example, if $S = t_1, ..., t_k$ is an event stream, then it could be mapped to S' = $\alpha,..., b$, with *a* corresponding to $\psi_1 \wedge \neg \psi_2$ if $\psi_1(t_1) \wedge \neg \psi_2(t_1) = TRUE$, *b* to $\psi_1 \wedge \psi_2$, etc.

Thus, if 5 is a stream from the domain elements of the algebra of a DSFA M and $T = Minterms(Predicates(M))$, then S' is the stream induced by applying $T$ on S, i.e., it is the equivalence class of S induced by T.

It can also be proven that for every deterministic symbolic automaton $M_S$ there exists a deterministic classical automaton $M_c$ such that $\mathcal{L}(M_c)$ is the set of strings induced by applying to $T = Minterms(Predicates(M))$ to $\mathcal{L}(M_S)$.

A direct consequence is that for every run

$$\varrho = [1, q_1] \overset{\delta_1}{\to} [2, q_2] \overset{\delta_2}{\to} ...$$

$$\overset{\delta_k}{\to} [k + 1, q_{k+1}]$$ followed by $M_S$ by consuming a symbolic string (stream of tuples) S, the run that $M_c$ follows by consuming the induced string S' is also

$$\varrho' = [1, q_1] \overset{\delta_1}{\to} [2, q_2]$$

$$\overset{\delta_2}{\to} ... \overset{\delta_k}{\to} [k + 1, q_{k+1}]$$, i.e., it follows the same copied/renamed states and the same copied/relabeled transitions.

This direct relationship between DSFA and classical DFA allows transferring techniques developed for classical DFA to the study of DSFA. Moreover, the notation can be simplified by employing the terminology of symbols/characters and strings/words that is typical for classical automata.

In a next step, the DSFA may then be converted to a Markov chain that encodes dependencies among the events in the received event stream. For example, the Markov chain is learned from a portion of the event stream which acts as training dataset and is used to derive probabilistic forecasts about when the DSFA is expected to reach a final state or, equivalently, about when a CE defined by the pattern is expected to occur.

A straightforward approach to build a Markov chain is to map each state of the automaton to a state of a Markov chain, then feed a training stream of symbols to the automation, count the number of transitions from each state to every other state and use these counts to calculate the transition probabilities. With this approach however in the worst case the order of the states of the Markov chain (i.e., how deep into the past a state can look when calculating its transition probabilities) can be 0 for all states, thus essentially assuming that the stream is composed of independent, identically distributed events.

An alternative approach is to first set a maximum order m that is captured and then iteratively split each state of the original automaton into as many states as required so that each new state can remember the past m symbols that have led to it. The new automaton that results from this splitting process is equivalent to the original, in the sense that they recognize the same language, but can always remember the last m symbols of the stream. With this approach, it is possible to guarantee that m-order dependencies can be captured. However, higher values of m can quickly lead to an exponential growth of the number of states and the approach may be practical only for low values of m.

For these reasons, the described method uses a VMM to mitigate the high cost of increasing the order m. As a result, the maximum order m can be increased to values not possible with the previous approaches and thus capture long-term dependencies, which can lead to a better accuracy.

VMMs learn conditional distributions by relaxing the assumption of length m being fixed. The length of the context s may vary, up to a maximum order $m_{max}$, according to statistics of the training data. By looking deeper into the past only when it is statistically meaningful, VMMs can capture both short- and long-term dependencies. The learning process can be broken down into three main components:

- counting, where it is counted how many times a symbol $\sigma$ appears after a context s and derive conditional probabilities;
- smoothing, where symbols are taken into account that belong to the alphabet, but never appear in the training dataset; and
- modeling the VMM, which may follow various directions, e.g., either predetermining $m_{max}$ or decided by the data.

As mentioned above, the present invention may use a PST as VMM of choice which is then converted to a PSA. This PSA is then embedded into each state of the DSFA, which then allows inferring when the DSFA will reach one of its final states, taking into account at the same time the statistical properties of the stream, as encoded into the PSA.

Consequently, the PSA is embedded in the DSFA so that a single automaton that has the power of both the DSFA and the PSA and can be used both for recognition and for inferring.

The embedding of the PSA in the DSFA can be formally defined as follows:

Let $M_R$ be a DSFA (its mapping to a classic automaton) and $M_S$ a PSA with the same alphabet. An embedding of $M_S$ in $M_R$ is a tuple $M = (Q, Q^s, Q^f, \Sigma, \Delta, \Gamma, \pi)$, where:

- $Q$ is a finite set of states;
- $Q^s \subseteq Q$ is the set of initial states;
- $Q^t \subseteq Q$ is the set of final states;
- $\Sigma$ is a finite alphabet;
- $\Delta: Q \times \Sigma \to Q$ is the transition function;
- $\Gamma: Q \times \Sigma \to [0,1]$ is the next symbol probability function;
- $\pi: Q \to [0,1]$ is the initial probability distribution.

The language $\mathcal{L}(M)$ of $M$ is defined, as usual, as the set of strings that lead $M$ to a final state. The following conditions must hold:

- $\Sigma = M_R. \Sigma = M_S. \Sigma$, i.e., all automata have the same alphabet;
- $\mathcal{L}(M) = \mathcal{L}(M_R)$, i.e., $M$ is equivalent to $M_R$ by having the same language; and
- for every string/steam $S_{1..k}$ $P_M(S_{1..k}) = P_{MS}(S_{1..k})$, where $P_M$ denotes the probability of a string calculated by M (through $\Gamma$) and $P_{MS}$ the probability calculated by $M_S$ (through $\gamma$), i.e., $M$ is equivalent to $M_S$, since both automata return the same probability for every string.

For every DSFA $M_R$ and PSA $M_S$ learned with the minterms of $M_R$, there exists an embedding of $M_S$ in $M_R$ that is equivalent to both $M_R$ and $M_S$.

The statistical properties of the portion of the event stream, as encoded in the probabilistic suffix automaton PSA, are then used in order to be able to infer when the complex event of the pattern as defined by a symbolic regular expression SRE R will be detected. Equivalently, it is interesting to infer when the DSFA of R will have reached one of its final states.

The single automaton embedding the deterministic symbolic finite automaton (DSFA) and the probabilistic suffix automaton (PSA) is used to perform forecasting on the received event stream.

After constructing an embedding M from the deterministic symbolic finite automaton DSFA $M_R$ and the symbolic finite automaton PSA $M_S$, the embedding M is used to perform forecasting on the event stream. Since the embedding M is equivalent to the deterministic symbolic finite automaton $M_R$, it can also consume a stream and detect the same instances of the symbolic regular expression R as those of $M_R$. The goal thus is to forecast, after every event, when M will reach one of its final states. More precisely, the number of transitions from any state M is estimated that might be in until it reaches for the first time one of its final states. Towards this goal, the theory of Markov chains can be used. Let $N$ denote the set of non-final states of $M$ and F the set of its final states. The transition matrix of M can be organized in the following way:

$$\Pi = \begin{pmatrix} N & N_F \\ F_N & F \end{pmatrix}$$

where N is the sub-matrix containing the probabilities of transitions from non-final to non-final states, $F$ the probabilities from final to final states, $F_N$ the probabilities from final to non-final states and $N_F$ the probabilities from non-final to final states. By partitioning the states of a Markov chain in two sets, such as $N$ and $F$, the probability of reaching a state in $F$ starting from a state in $N$ can be estimated.

If $\Pi$ is the transition probability matrix of a homogeneous Markov chain $Y_t$ in the form described above and $\xi_{init}$ its initial state distribution, then the probability for the time index $n$ when the system first enters the set of states F, starting from a state in $N$, can be obtained from:

$$P(Y_n \in F, Y_{n-1} \notin F, \ldots, Y_1 \notin F \mid \xi_{init}) = {\xi_N}^T N^{n-1}(1-N)1$$

where $\xi_N$ is the vector consisting of the elements of $\xi_{init}$ corresponding to the states of N.

In the present case, the sets N and F have the meaning of being the non-final and final states of M. The above equation gives the desired probability of reaching a final state. In this case, the probability for the time index $n$ when the system first enters the set of states F, starting from a state in F, can be obtained from:

$$P(Y_n \in F, Y_{n-1} \notin F, \ldots, Y_1 \in F \mid \xi_{init}) = \begin{cases} {\xi_F}^T F1 & if\ n = 2 \\ {\xi_F}^T F_N N^{n-2}(I-N)1 & otherwise \end{cases}$$

where $\xi_F$ is the vector consisting of the elements of $\xi_{init}$ corresponding to the states of $F$.

Using the two above equations, waiting-time distributions for any state q of the automaton can be calculated, i.e., the distribution of the index $n$, given by a waiting-time variable $W_q = inf\{n : Y_0, Y_1, \ldots, Y_n, Y_0 = q, q \in Q\backslash F, Y_n \in F\}$.

The above provide a way to calculate the probability of reaching a final state, given an initial state distribution $\xi_{init}$. In the present case, where an automaton moves through its various states, $\xi_{init}$ has a special form. As the automaton consumes a stream, it always finds itself (with certainty) in a specific state $q$. As a result, for each state $q$ that the automaton might find itself in, $\xi_{init}$ is a vector with all of its elements being equal to 0, except for the element corresponding to the current state of the automaton, which is equal to 1.

The waiting-time distributions can be used to produce various kinds of forecasts. In a first case, a distribution is scanned in order to find the point with the highest probability and this point is returned as forecast. Alternatively, it is determined whether a CE will occur within the next w events. In this case, the probabilities of the first w points of a distribution can be summed up and if this sum exceeds a given threshold a "positive" forecast (meaning that a CE is indeed expected to occur) is emitted. Otherwise, a "negative" forecast (no CE is expected) is emitted.

In a third case, the forecast from a state q has the form of an interval whose calculation is based on the waiting-time distribution of q. The meaning of such a forecast interval I = (*start, end)* is the following: given the automaton is in a state *q,* it is forecast that the automaton, with confidence at least $\theta_{f_c}$, will have reached its final state(s) in $n$ transitions from now, where *start* $\leq n \leq$ *end*. The confidence threshold $\theta_{f_c}$ is a parameter which may be set by a user. If multiple intervals exceeding $\theta_{f_c}$ exist, the one with the smallest *spread* is chosen, where *spread = end - start*.

Instead of continuously producing (low-quality) forecasts, the described method emits new forecasts only when it is necessary through various mechanisms. First, it may produce forecasts only when they are probable enough. Second, if it is known when a future complex event is about to happen (e.g., in testing scenarios), a distance may be fixed before the complex event and forecasts are only produced at that distance. Third, in real-word scenarios, where the occurrence of a complex event is unknown, it can be inferred how close a pattern is to its completion by analyzing its structure. Based on this analysis, it can be estimated an expected distance (or ranges of distances).

The reason for constructing an embedding, as described above, is that it is based on a variable-order Markov model and the expectation is that it will thus consist of much fewer states than a full-order Markov model. In practice, however, it has been observed that the gains from creating an embedding are not always as significant as expected. Although the number of states of an embedding may be smaller (even up to 50%), it is often still in the same order of magnitude as that of a full-order Markov model. A reduction in the number of states that can reach up to 50% might seem significant, but the fact that the order of magnitude remains the same means that such a reduction is sometimes of little use. For example, if a full-order Markov model requires 1 million states and it is thus impossible to build this model, reducing this number to 500.000 states makes no difference, since it is often still not possible to handle so many states.

One specific step in the process of creating an embedding acts as main bottleneck: the step of converting a PST to a PSA. The difference between the number of nodes of a PST and the number of states of the PSA constructed from that PST has a range that covers several orders of magnitude.

In some embodiments, the method therefore estimates the required waiting-time distributions without actually constructing the embedding, by making direct use of a prediction suffix tree. In particular, if the received pattern is received in a form of a symbolic regular expression (SRE), the method constructs a streaming finite symbolic automaton (sFSA) based on and equivalent to the SRE. A deterministic symbolic finite automaton (DSFA) is then constructed based on and equivalent to the sFSA. The method generates a prediction suffix tree (PST) as the variable-order Markov model. The PST encodes statistical properties of at least a portion of the received event stream. As events of the event stream are consumed, besides feeding them to the DSFA, they are also feed to a buffer that always holds the last m events from the event stream, where m is equal to the maximum order of the PST. After consuming an event and feeding it to the buffer, the PST is traversed according to contents of the buffer. This traversal leads to a leaf $l$ of the PST. Thus, it is possible to estimate the probability of any future sequence of events.

If $S_{1..k} = \cdots, t_{k-1}, t_k$ is the seen stream, then the next symbol probability for $t_{k+1}$ can be directly retrieved from the distribution of the leaf ($P(t_{k+1} \mid t_{k-m+1}, \dots, t_k)$). In order to look further into the future, e.g., into $t_{k+1}, t_{k+2}$ this process may be iterated as many times as necessary. The probability for $t_{k+2}$, ($P(t_{k+2} \mid t_{k-m+2}, \dots, t_{k+1})$), can again be retrieved from the probabilistic suffix tree $T$, by finding the leaf $l'$ that is reached with $t_{k+1}, \dots, t_{k-m+2}$. Thus, the probability of any future sequence of events can be found. As a result, the probability of any future sequence of states of the DSFA $M_R$ can be found, since these future event sequences are simply fed to $M_R$ and a "forward" recognition is performed with these projected events. Finally, since the probability for any future sequence of states of $M_R$ can be estimated, the definition of the waiting-time variable ($W_q = inf\{n : Y_0, Y_1, ..., Y_n, Y_0 = q, q \in Q \backslash F, Y_n \in F\}$) can be used to calculate the waiting-time distributions.

This approach thus optimizes the determination of the forecast by bypassing the construction of a PSA and can estimate forecasts directly via a PST.

In some embodiments, the output forecast comprises forecast intervals estimated from waiting-time distributions.

The waiting-time distributions are estimated in turn either from the Markov chain corresponding to the automaton or directly from a prediction suffix tree, when the above optimization is employed.

In some embodiments, the method estimates a number of occurrences of events in the received event stream by using a tree data structure, wherein each node of the tree data structure is a tuple which comprises a symbol from an alphabet of the received event stream and a counter, and wherein the counter of every node is equal to the sum of the counters of children of the node.

In order to calculate empirical probabilities of symbols given various contexts the number of occurrences of various candidate strings s in $S_{1..k}$ may be counted.

The number of occurrences may be estimated by using a tree data structure which allows scanning the training dataset (i.e., a portion of the event stream) only once. This structure is called a counter suffix tree (CST). Each node in a CST is a tuple (a, c) where $\sigma$ is a symbol from the alphabet (or $\varepsilon$ only for the root node) and c a counter. The counter of every node is equal to the sum of the counters of its children. By following a path from the root to a node, we get a string s = $\sigma_0 \cdot \sigma_1 \dots \sigma_n$, where $\sigma_0 = \varepsilon$ corresponds to the root node and $\sigma_n$ to the symbol of the node that is reached. The property that we maintain as we build a CST from a stream $S_{1..k}$ is that the counter of the node that is reached with s gives us the number of occurrences of the string $\sigma_n \cdot \sigma_{n-1} \dots \sigma_1$ (the reversed version of s) in $S_{1..k}$.

A CST can be incrementally constructed by maintaining a buffer of size m that always holds the last m elements of S. The contents of the buffer are fed into the CST after every new element is read. The CST starts following a path according to the string provided by the buffer. For every node that already exists, its counter is incremented by 1. If a node does not exist, it is created and its counter set to 1. After the CST has read the training dataset, it can be used to retrieve the necessary counters and estimate the empirical probabilities.

In some embodiments, the method performs regression CE forecasting and/or classification CE forecasting.

The method may perform various types of forecasting tasks. For example, the method allows a) SE forecasting, where the goal is to forecast the immediately next SE or SEs in the input stream; b) regression CE forecasting, where the goal is to forecast when a CE is expected to occur; and/or c) classification CE forecasting, where the goal is to forecast whether or not a CE will occur within a predetermined future window.

In SE forecasting, the method may forecast the next simple event (SE) to appear in the input stream, given that the last m SEs are known. This task is equivalent of next symbol predication in the terminology of the compression community. The "symbols" which the method predicts are essentially the minterms of the DSFA. In other words, the method does not predict what the next SE will be, but which minterm the next SE will satisfy.

In SE forecasting, a forecast may be emitted after every SE is consumed.

In regression CE forecasting, it is forecast when a CE will occur. These forecasts are called regression CE forecasting due to the fact that the forecasts are "continuous" values in the form of forecast intervals/points. This is in contrast to classification CE forecasts, where each forecast is a binary value, indicating whether a CE will occur or not.

In regression (and classification) CE forecasting, emitting a forecast after every new SE is feasible in principle, but not very useful and can also produce results that are misleading. By their very nature, CEs are relatively rare within a stream of input SEs. As a result, if a forecast is emitted every new SE, some of these forecasts (possibly even the vast majority) will have a significant temporal distance from the CE to which they refer.

For these reasons, before forecasting CEs, the method may further comprise a preprocessing step. The goal is to find time points within a stream where it is "meaningful" to emit forecasts. These time points may be called "checkpoints" of the stream. To do so, a recognizing step is first performed on the stream to find the time points where CEs are detected. Then, a required distance d is set which defines the distance a forecast is separated from its CE, in the sense that it is required that each forecast to be emitted d events before the CE. After finding all the CEs in a stream and setting a value for d, all the SEs are set as checkpoints which occur d events before the CEs. This typically means that there are as many checkpoints as CEs for a given value d (unless the distance between two consecutive CEs is smaller than d, in which case no checkpoint for the second CE exists).

At each checkpoint, a forecast is produced as described above. However, an extra constraint may be imposed, requiring that the maximum spread of each forecast is 0, i.e., point (instead of interval) forecasts are produced. The reason for this is that some of the metrics that are used to assess the quality of the forecasts assume that forecasts are in the form of points. Such point metrics are the following: the Root Mean Squared Error (RMSE) and the Mean Absolute Error (MAE) (the latter is less sensitive than RMSE to outliers). If the set of all checkpoints is denoted by C, the actual distance (in number of events) between a checkpoint c and its CE (which is always d) is denoted by $y_c$, and the forecast is denoted by $\hat{y}_c$, than the definitions for RMSE and MAE are as follows:

$$RMSE = \sqrt{\frac{1}{|C|} \sum_{c \in C} | \hat{y}_c - y_c|^2}$$

$$MAE = \frac{1}{|C|} \sum_{c \in C} | \hat{y}_c - y_c|$$

Besides these points metrics, an interval metric is used, the so-called negatively oriented interval score. If $\hat{y}_c$ = $(l_c, u_c)$ is an interval forecast produced with confidence b = 1 - a and $y_c$ the actual observation (distance), then the negatively oriented interval score (NOIS) for this forecast is given by:

$$NOIS_c = (u_c - l_c) + \frac{2}{a}(l_c - y_c)I_{x<l_c} + \frac{2}{a}(y_c - u_c)I_{x>u_c}$$

The average negatively oriented interval score (ANOIS) is estimated as follows:

$$ANOIS = \frac{1}{|C|} \sum_{c \in C} NOIS_c$$

The best possible value for ANOIS is 0 and is achieved only when all forecasts are point forecasts (so that $u_c$ - $l_c$ is always 0) and all are also correct. In every other case, a forecast is penalized if its interval is long (so that focused intervals are promoted), regardless of whether it is correct. If it is indeed correct, no other penalty is added. If it is not correct, then an extra penalty is added, which is essentially the deviation of the forecast from the actual observation, weighted by a factor that grows with the confidence of the forecast. For example, if the confidence is 100%, then $b$ = 1.0, $a$ = 1.0 and the extra penalty, grows to infinity. Incorrect forecasts produced with high confidence are thus severely penalized. If only point forecasts ($\hat{y}_c = l_c = u_c$) are emitted, then NOIS and ANOIS could be written as follows:

$$NOIS_c = \frac{2}{a}|\hat{y}_c - y_c|$$

$$ANOIS = \frac{1}{|C|}\sum_{c \in C}\frac{2}{a}|\hat{y}_c - y_c|$$

ANOIS then becomes a weighted version of MAE.

In classification CE forecasts, the goal is to predict the occurrence of CEs within a short window or provide a "negative" forecast if the method predicts that no CE is likely to occur within this window.

In regression CE forecasting, CEs provide a natural point of reference. In classification CE forecasting, such reference points do not exist, since it is required to predict the absence of CEs. As a result, instead of using the stream to find checkpoints, the structure of the automaton itself is used. Even if the actual distance to a CE is not known, the automaton can provide an "expected" or "possible" distance. For an automaton that is in a final state, it can be said that the distance to a CE is 0. More conveniently, the "process" which it describes has been completed or, equivalently, that there remains 0% of the process until completion. For an automaton that is in a non-final state but separated from a final state by a single transition, it can be said that the "expected" distance is 1. The term "expected" is used to indicate that it is not important whether the automaton will actually take the transition to a final state. When the automaton fails to take the transition to a final state (and thus there is an absence of a CE), this "expected" distance is not an actual distance, but a "possible" one that failed to materialize. Furthermore, there might also exist other walks from this non-final state to a final one whose length could be greater than 1 (in fact, there might exist walks with "infinite length", in case of loops). In order to estimate the "expected" distance of a non-final state, the shortest walk to a final state is used. After estimating the "expected" distances of all states, they can then be expressed as percentages be dividing them by the greatest among them. A 0% distance will thus refer to final states, whereas a 100% distance to the state(s) that are the most distant to a final state, i.e., the automaton has to take the most transitions to reach a final state. These are the start states. Checkpoints then can be determined by specifying the states in which the automaton is permitted to emit forecasts, according to their "expected" distance. For example, checkpoints may be established by allowing only states with a distance between 40% and 60% to emit forecasts. The intuition here is that, by increasing the allowed distance, the forecasting task is made more difficult.

The task itself comprises the following steps. At the arrival of every new input event, it is checked whether the distance of the new automaton state falls within the range of allowed distances, as explained above. If the new state is allowed to emit a forecast, we use its waiting-time distribution to produce the forecast, albeit in a manner slightly different than that described above. Two parameters are taken into account: the length of the future window $w$ within which it is to be determined whether a CE will occur and the confidence threshold $\theta_{f_c}$. If the probability of the first $w$ points of the distribution exceeds the threshold $\theta_{f_c}$, a positive forecast is emitted, essentially affirming that a CE will occur within the next $w$ events; otherwise, a negative forecast is emitted, essentially rejecting the hypothesis that a CE will occur. The method thus provides a binary classification task.

As far as the metrics are concerned, the standard ones used in classification tasks are used, like precision and recall. Each forecast is evaluated: a) as a true positive (TP) if the forecast is positive and the CE does indeed occur within the next $w$ events from the forecast; b) as a false positive (FP) if the forecast is positive and the CE does not occur; c) as a true negative (TN) if the forecast is negative and the CE does not occur and d) as a false negative (FN) if the forecast is negative and the CE does occur. Precision is then defined as $Precision = \frac{TP}{TP+FP}$ and recall (also called sensitivity or true positive rate) as $Recall = \frac{TP}{TP+FN}$. As already mentioned, CEs are relatively rare in a stream. It is thus important for a forecasting engine to be as specific as possible in identifying the true negatives. For this reason, besides precision and recall, specificity (also called true negative rate) is used, defined as $Specificty = \frac{TN}{TN+FP}$.

A classification experiment is performed as follows. For various values of the "expected" distance and the confidence threshold $\theta_{f_c}$, precision, recall and specificity are estimated on a test dataset. For a given distance, $\theta_{f_c}$ acts as a cut-off parameter. This means that, for each distance, precision-recall and ROC curves are plotted, using the points obtained from the values of $\theta_{f_c}$. For each distance, the area under curve (AUC) then can be estimated for both the precision-recall and ROC curves. The higher the AUC value, the better the model is assumed to be.

In some embodiments, the method for forecasting is distributed so that it is processable by two or more processing units (e.g., processors, processor cores, or threads).

Typically, training a variable-order Markov model is expensive and performed offline. In order to perform both the training and the actual processing in an online manner, the described method employs distribution techniques.

For example, a query-based parallelization technique is used. Each query is assigned to a different processing unit and the queries are executed in parallel. Queries are essentially patterns transformed to automata. That means that the number of patterns to forecast is equally divided to the number of available processing units. In this solution, the event stream is broadcast to all parallel instances, since all the patterns work for the same event stream.

In some embodiments, the Markov model is trained in an offline manner.

In an offline training phase, a model is first learned from stored data and then this learned model is used in an online fashion to emit forecasts. For example, the described method may use a portion of the event stream as training dataset for the Markov model. When the training is completed, the Markov model has the ability to derive probabilistic forecasts from the events of the stream as they arrived (i.e., online).

When there are multiple patterns to forecast, multiple Markov models are created - one for each pattern. One Markov model needs to train on the whole stream, then the next Markov chain on the whole stream and so on.

The Markov model is trained in an online manner.

Online training means that the model is "continuously" updated, ideally after every single input event. Such an approach is normally prohibitively expensive. The described method is however able to update the variable-order Markov model only when it is actually necessary. For example, an update of the model may be triggered when a concept drift is detected.

As a result, the forecasting and training is performed at the same time. The method consumes events as input and emits events, while at the same time it constructs/updates the model. Thus, the learned model is always up to date.

The described method may be used by domain analysts who apply methods of complex event processing to analyze data streams from different domains and need to be able to predict occurrences of complex events.

The described method is not domain-specific, but may be potentially applied to any domain where data is continuously produced in a streaming fashion and needs to be analyzed online with strict latency requirements. In particular, the described method system may consume high-velocity, high-volume data streams in order to analyze them, according to patterns of interests defined by domain experts through the received pattern (or automatically learnt). The forecasted complex events are used to notify analysts about impending critical situations, or, in general, situations of interest.

Some application domains are discussed below.

In some non-claimed embodiments, the described method is used to monitor and/or analyze financial transactions to detect fraud or to support a decision-making process, for example, with securities transactions.

For example, events of the event stream are credit card transactions, accompanied by several arguments, such as the time of the transaction, the card ID, the amount of money spent, the country where the transaction took place, etc. In the real world, a small amount of such transactions are fraudulent and the goal of a complex event forecasting system would be to detect, with very low latency (e.g., in the order of a few milliseconds), fraud instances and/or suspicious activity patterns. A processing system then can devote more resources and higher priority to those instances or patterns. To do so, a set of fraud patterns must be provided. For typical cases of such patterns in a simplified form are known in the art. For example, one such pattern comprises a sequence of consecutive transactions where the amount spent at each transaction is greater than that of the previous transaction. Such a trend of steadily increasing amounts constitutes a typical fraud pattern.

The detection of fraud is however not limited to credit card transactions. The described method may also be used, among others, for insurance or investment fraud forecasting.

With the described method, it is possible to forecast if and when such a pattern will be completed, even before it is detected by a recognition engine (if in fact a fraud instance occurs), so as to possibly provide a wider margin for action. Thus, the described method makes it possible to take proactive actions before the fraud is normally detected.

Another example for using the described method in the financial field is the stock market. Based on historical data and/or share price developments, the described method allows forecasting whether the price is expected to rise or fall in the future. The described method therefore also allows making smarter and/or more informed decisions.

In the financial field, the described method therefore allows enhancing the security by forecasting fraudulent behavior before it actually occurs.

In some other embodiments, the described method is used to control vehicles.

For example, the complex event forecasting system receives events from vessels sailing at sea. Each event of the received event stream may contain information regarding the status of a vessel, e.g. its location, seeps, heading. The emitted events may be AIS (Automatic Identification System) messages. Respective trajectories can be analyzed, using the described method, in order to detect and forecast interesting patterns in the behavior of vessels.

A possible pattern could be a movement pattern in which a vessel approaches a port. Thus, the method forecasts when a vessel will enter a port.

Additionally or alternatively, the described system also allows controlling autonomous systems. Based on sensor and/or location data received from a vehicle (e.g., ships at sea, aircrafts in the air, or vehicles on the ground), it is possible to forecast certain events and/or control autonomous systems. For example, collision avoidance is obviously of paramount importance for this domain. The described method may infer that two (or more) moving objects are on a collision course and forecast that they will indeed collide if no action is taken.

In other non-claimed embodiments, the described method is used for machine monitoring and/or machine maintenance.

Many machines or vehicles are serviced at fixed intervals. Nevertheless, it often happens that such machines or components thereof fail and then have to be replaced.

Predictive maintenance (or proactive maintenance) is maintenance that monitors the performance and condition of equipment during normal operation to reduce the likelihood of failures. In order to ensure operability and safety of machines or vehicles, the present method can forecast possible failures based, for example, on the performance data received from the machines or vehicles. If failures are to be expected, it is possible to replace respective components or machines before malfunctions actually occur. This reduces both downtime and costs.

Different types of machines or vehicles may be monitored. For example, aircrafts (e.g., civil and military airplanes), vessels (e.g., ships), land vehicles (e.g., cars or trucks), industrial equipment (e.g., production machine, oil and gas production systems, etc.), robots (e.g., used for smart manufacturing), etc.

In other non-claimed embodiments, the described method is used for monitoring and/or analyzing simulations.

The described method may also play an important role in (large-scale) biological simulations or in in-silico biology, where computationally demanding simulations of biological systems are often executed to determine the properties of these systems and their response to treatments. These simulations are typically run on supercomputers and are evaluated afterwards to determine which of them seem promising enough from a therapeutic point of view. The described method may monitor these simulations as they run, predict which of them will turn out to be non-pertinent and decide to terminate them at an early stage could thus save valuable computational resources and significantly speed-up the execution of such in-silico experiments. For example, expensive tumor growth simulations can be monitored to forecast which might be interesting from a therapeutic perspective.

In the field of computing, the described method can be used for high performance computing optimization.

In addition to the above-described method for forecasting complex events, several alternative concepts are possible.

As described above, the described method receives a pattern defining a complex event. An automaton (e.g., a DSFA) is then derived from the pattern. In an alternative implementation, the method may receive or obtain the DSFA as input. In such an implementation, the method does not receive the pattern defining the complex event and does not construct the streaming finite symbolic automaton and the deterministic symbolic finite automaton, but directly uses the DSFA to create and learn a PSA.

In other implementations, the method is also able to work without a previously received pattern, given that a labeled training stream is available. In such cases, the method may independently discover the paths that a pattern follows to produce full matches, encode these paths in a probabilistic structure and use it to perform forecasting.

A data processing system or data processing device comprising a processor and a memory is also provided. The processor is configured to perform the method disclosed herein.

A "processor" includes any, hardware system, mechanism or component that processes data, signals or other information. A processor can include a system with a central processing unit, multiple processing units, dedicated circuitry for achieving functionality, or other systems. Processing need not be limited to a geographic location, or have temporal limitations. For example, a processor can perform its functions in real-time, offline, in a batch mode, etc. Portions of processing can be performed at different times and at different locations, by different (or the same) processing systems.

Those skilled in the relevant art will appreciate that the method may be implemented or practiced with different computer system configurations, including without limitation multi-processor systems, network devices, mini-computers, mainframe computers, data processors, and the like. The invention may be embodied in a computer or data processor that is specifically programmed, configured, or constructed to perform the functions described in detail herein. The invention may also be employed in distributed computing environments, where tasks or modules are performed by remote processing devices, which are linked through a communications network such as a LAN, WAN, and/or the Internet. In a distributed computing environment, program modules or subroutines may be located in both local and remote memory storage devices. These program modules or subroutines may, for example, be stored or distributed on computer-readable media, including magnetic and optically readable and removable computer discs, stored as firmware in chips, as well as distributed electronically over the Internet or over other networks (including wireless networks). Example chips may include Electrically Erasable Programmable Read-Only Memory (EEPROM) chips.

Various software/hardware/network architectures may be used. For example, the functions of the described method may be implemented on one computer or shared/distributed among two or more computers in or across a network. Communications between computers implementing embodiments can be accomplished using any electronic, optical, radio frequency signals, or other suitable methods and tools of communication in compliance with known network protocols.

Further, a computer program product is provided. The computer program product comprises instructions which, when the program is executed by a computer or a computing device, cause the computer or the computing device to carry out the above described method.

Any suitable programming language may be used to implement the routines, methods, or programs of embodiments of the invention described herein, including C, C++, Java, JavaScript, HyperText Markup Language (HTML), Python, or any other programming or scripting code.

Further, different programming techniques may be employed such as procedural or object oriented. Any particular routine may execute on a single computer processing device or multiple computer processing devices, a single computer processor or multiple computer processors.

A computer-readable medium comprising the computer program product is also provided. For example, the computer program product may be stored as computer instructions on a non-transitory computer-readable storage medium.

A "computer-readable medium" as used herein may be any medium that can contain, store, communicate, propagate, or transport the program for use by or in connection with an instruction execution system, apparatus, system, or device. The computer-readable medium may be, by way of example only but not by limitation, an electronic, magnetic, optical, electromagnetic, infrared, or semiconductor system, apparatus, system, device, propagation medium, or computer memory. Such computer-readable medium shall be machine readable and include software programming or code that can be human readable (e.g., source code) or machine readable (e.g., object code).

Examples of non-transitory computer-readable media may include random access memories, read-only memories, hard drives, data cartridges, magnetic tapes, floppy diskettes, flash memory drives, optical data storage devices, compact-disc read-only memories, and other appropriate computer memories and data storage devices. Some or all of the software components may reside on a single computer or on any combination of separate computers.

The method discussed herein (or parts thereof) may be implemented in suitable instructions that may reside on the non-transitory computer-readable medium, hardware circuitry or the like, or any combination and that may be translatable by one or more machines.

## BRIEF DESCRIPTION OF THE DRAWINGS

The forgoing and other features and advantages of the invention will become further apparent from the following detailed description read in conjunction with the accompanying drawings. In the drawings, like reference numbers refer to like elements.

Fig. 1 is a schematic drawing illustrating steps for calculating forecasts for a given pattern according to an embodiment of the invention.

Fig. 2 is a schematic drawing illustrating steps for calculating forecast intervals of a DSFA according to an embodiment of the invention.

Figs. 3A-B are schematic drawings illustrating a conversion of a PST to a PSA.

Figs. 4A-B are schematic drawing showing an example of embedding a DSFA into a PSA.

Figs. 5A-B are schematic drawing showing an example for an automaton and its waiting-time distribution.

Figs. 6A-C are schematic drawings showing examples of estimating a waiting-time distributions without a Markov chain.

Fig. 7 is a schematic drawing showing an example of a counter suffix tree.

Fig. 8 is a flow diagram illustrating a method for building a complex event forecasting system according to an embodiment of the invention.

Fig. 9 is a diagrammatic representation of a data processing system for performing the method disclosed herein.

## DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art.

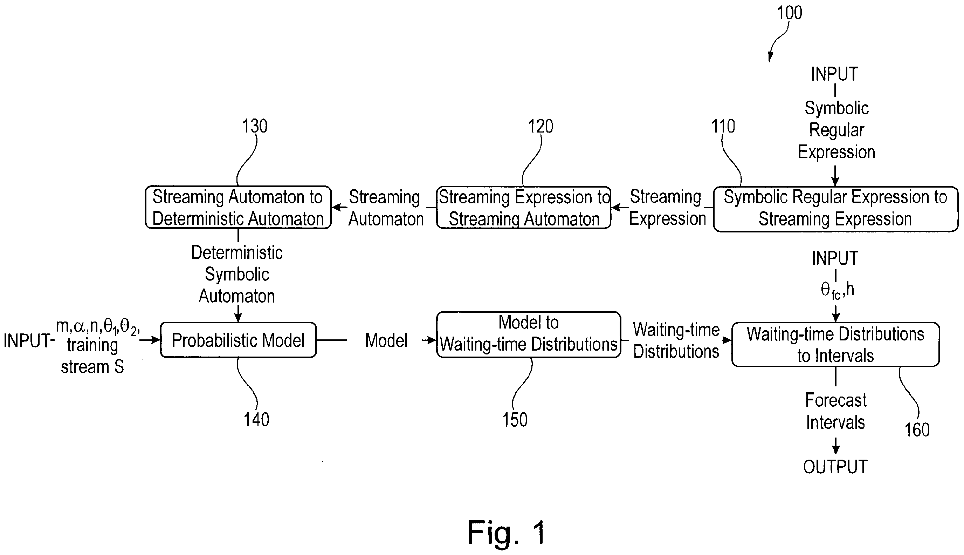

Fig. 1 illustrates method steps for calculating forecasts for a given pattern.

As input, the method 100 receives a symbolic regular expression. In step 110, the symbolic regular expression is converted to a streaming symbolic regular expression. Step 120 uses the streaming symbolic regular expression to construct a streaming finite symbolic automaton which is then determinized into a deterministic symbolic finite automaton (step 130).

In step 140, an order of a prediction suffix tree m, an approximation parameter for tree learning $\alpha$, a maximum number of states for a learned suffix automaton $n$, thresholds for tree learning $\theta_1$, $\theta_2$, and a training stream 5 are input or obtained. These inputs together with the deterministic symbolic finite automaton created in step 130 are used to generate a probabilistic model.

Step 150 then employs the probabilistic model to calculate waiting-time distributions. Based on the waiting-time distributions, a confidence threshold $\theta_{f_c}$, and a maximum index of the distribution $h$, forecast intervals are determined (step 160).

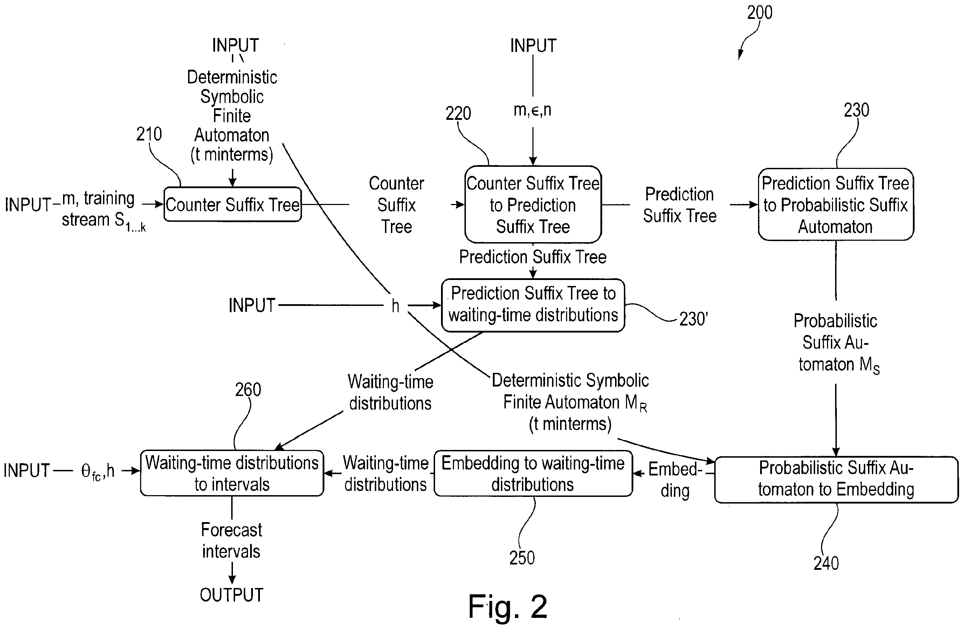

Fig. 2 shows steps for calculating forecast intervals of a DSFA, along with input required for each of the steps. $m$ is a maximum assumed order, $\varepsilon$ an approximation parameter, $n$ a maximum number of states for a probabilistic suffix automaton (PSA) and $\theta_{f_c}$ a confidence threshold of the intervals.

Step 210 takes as input *minterms* of a received or constructed DSFA, the maximum order m of dependencies to be captured and a training stream $S_{1..k}$. Its output is a counter suffix tree (CST) of maximum depth m. In step 220, the CST is then converted to a prediction suffix tree (PST), using the approximation parameter $\varepsilon$ and the parameter $n$ for the maximum number of states for the PSA to be constructed in the next step. Step 230 converts the PST to the PSA, by using the leaves of the PST as states of the PSA. This PSA is then merged with the initial DSFA to create an embedding of the PSA in the DSFA (step 240). From the embedding waiting-time distributions are calculated in step 250 and the waiting-time distributions are used to derive the forecast intervals in step 260, using a predetermined confidence threshold $\theta_{f_c}$ provided by a user. In step 230', Fig. 2 also shows an alternative option of bypassing the construction of the PSA, by estimating the waiting-time distributions directly from the PST.

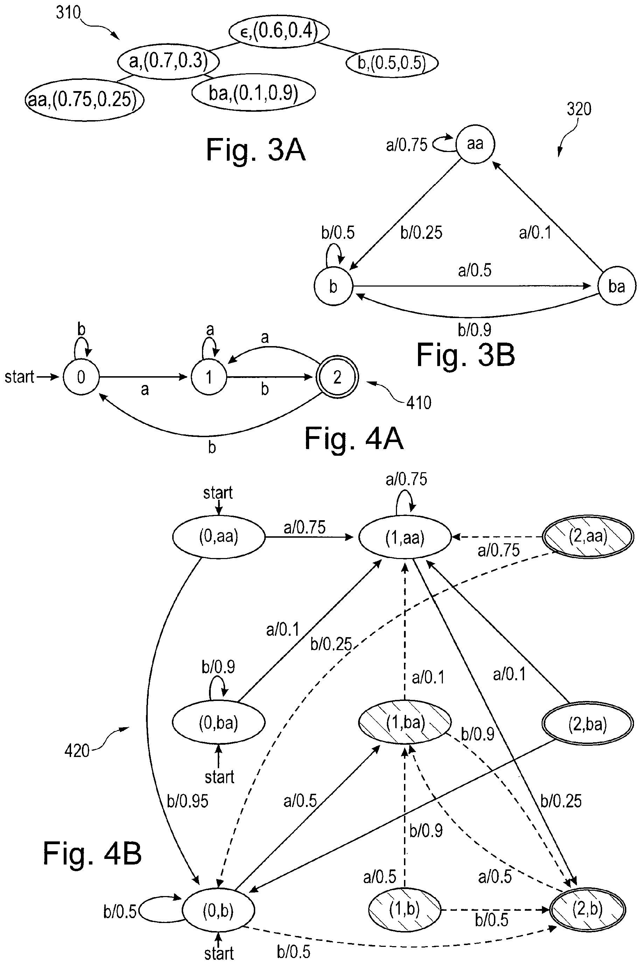

Figs. 3A and 3B show example of a prediction suffix tree 310 and its corresponding probabilistic suffix automation 320.

In Fig. 3A, the prediction suffix tree 310 is depicted for $\Sigma = \{a, b\}$ and m = 2. Each node of the prediction suffix tree 310 contains the label and the next symbol probability distribution for *a* and b. Fig. 3B shows the probabilistic suffix automaton 320 constructed from the prediction suffix tree 310, using leaves of the probabilistic suffix tree 310 as states of the probabilistic suffix automaton 320. Each state contains its label. Each transition is composed of the next symbol to be encountered along with that symbol's probability.

A full-order probabilistic suffix automaton for m = 2 would require a total of 4 states, given the two symbols. If the prediction suffix tree 310 is used, the probabilistic suffix automaton 320 can be constructed with 3 states. State b does not need to be expended to states *bb* and *ab,* since the prediction suffix tree 310 tells that such an expansion is not statically meaningful.

Using a PSA, a stream of symbols can be consumed and at every point an estimate about the next symbols that are encountered along with their probabilities can be provided. For the probabilistic suffix automaton 320, if the last symbol consumed from the stream is b, then the probabilistic suffix automaton 320 would be in state b and the probability of the next symbol being *a* would be 0.5. If the last symbol in the stream is *a,* it is necessary to expand this suffix to look at one more symbol in the past. If the last two symbols are *aa,* then the probabilistic suffix automaton 320 would be in state *aa* and the probability of the next symbol being *a* again would be 0.75.

Figs. 4A and 4B show an example of an embedding 420 of a DSFA 410 into the prediction suffix automaton 320 of Fig. 3B.

In the example, Fig. 4A depicts the DSFA 410 for the expression $R = a \cdot b$ with $\Sigma = \{a, b\}$. It is presented as a classical automaton, but the symbols correspond to minterms. Thus, $\Sigma$ is the set of minterms. Fig. 3A shows the prediction suffix tree 310 that could be learned from a training stream of symbols from $\Sigma$ and Fig. 3B shows the probabilistic suffix automaton 320 constructed from the prediction suffix tree 310.

Fig. 4B shows the embedding 420 that would be created, following the construction procedure according to the methods described herein. The embedding 420 in Fig. 4B has some redundant states and transitions. The states (1, *ba*), (1, *b*), (2, *aa*), and (2, b) have no incoming transitions and are thus inaccessible. The reason is that some states of the DSFA 410 in Fig. 4A have a "memory" imbued to them from the structure of the automaton itself. All incoming transitions to state 1 of the DSFA 410 have *a* as their symbol. Similarly, state 2 has only one transition with b as its symbol. Therefore, there is no point in merging state 1 of the DSFA 410 with all the states of the probabilistic suffix automaton 320, but only with state b. If a straightforward construction is followed, as described above, the result will be the automaton depicted in Fig. 4B, including the redundant states. To avoid the inclusion of such states, the DSFA 410 and the probabilistic suffix automaton 320 can be merged in an incremental fashion as described above. The resulting automaton would then consist only in states (0, *b*), (0, *ba*), (0, *aa*), (1, *aa*) and (2, *ba*) and the respective transitions of Fig. 4B.

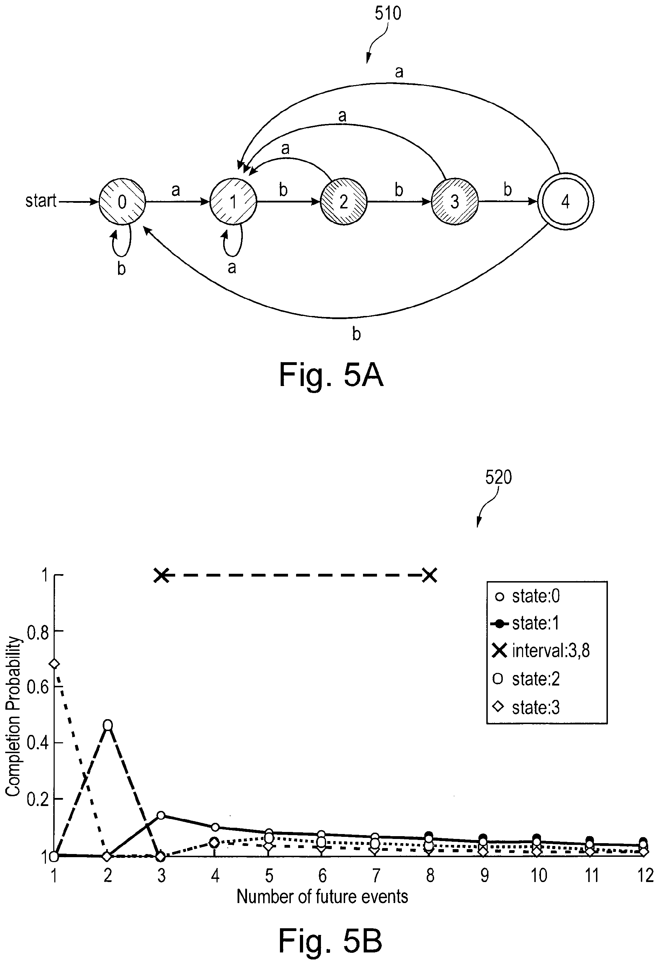

Figs. 5A and 5B show an example of an automaton 510, along with the waiting-time distributions 520 for its non-final states.

If the automaton 510 is in state 2, then the probability of reaching the final state 4 for the first time in 2 transitions is ≈ 50% but 0% for 3 transitions (the automaton has no path of length 3 from state 2 to state 4).

Fig. 5B shows the forecast interval produced for state 1 of the automaton of Fig. 3A, with $\theta_{f_c}$ = 50%.

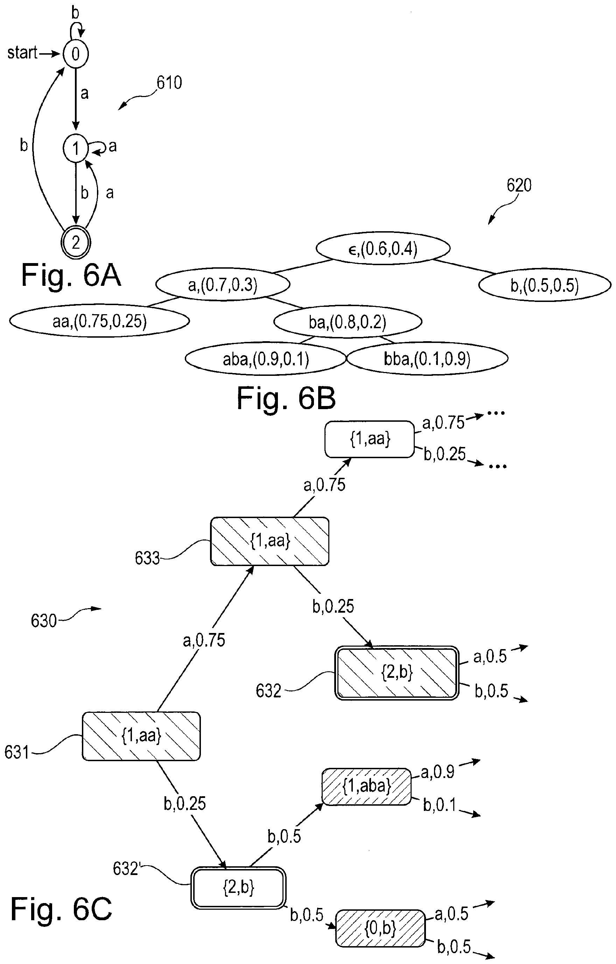

In Figs. 6A-C, exemplary steps of a process for estimating waiting-time distributions without actually constructing an embedding are shown. Fig. 6A shows an DSFA 610 and Fig. 4B shows an PST 620.

As mentioned above, the conversion of the PST 620 to a PSA could lead to a blow-up in the number of states. The basic step in such a conversion is to take the leaves of PST 620 and use them as states for the PSA. If this were the only step, the resulting PSA would always have fewer states than the PST. As this example shows, this is not the case.

Imagine that the states are just the leaves of PST 620 and that we are in the right-most state/node, b, (0.5, 0.5). If an *a* event arrives, it is not possible to find a proper next state. The state *aa*, (0.75, 0.25) is obviously not the correct one, whereas states *aba*, (0.9, 0.1) and *bba*, (0.1, 0.9) are both "correct", in the sense that *ba* is a suffix of both *aba* and *bba.* In order to overcome this ambiguity regarding the correct next state, node b, (0.5, 0.5) of PST 620 first has to be expanded and then the children of this node as states of the PSA are used. In this simple example, this expansion of a single problematic node would not have serious consequences. But for deep trees and large alphabets, the number of states caused by such expansions far outweighs the number of the original leaves. As a result, the size of the PSA is far greater than that of the original, unexpanded PST.

Fig. 6C shows how the probability for any future sequence of states of the DSFA 610 can be estimated, using the distributions of the PST 620. For example, after consuming the last event, the DSFA 610 is in state 1 and the PST 620 has reached node, *aa*, (0.75, 0.25). Each node in this figure has two elements: the first one is the state of the DSFA 610 and the second the node of the PST 620, starting with node 633 {1, *aa*} as the current "configuration". Each node has two outgoing edges, one for *a* and one for b, indicating what might happen next and with what probability. For example, from the node 633, according to the PST 620, *a* might be seen with probability 0.75 and *b* with probability 0.25. If we do encounter *b*, then the DSFA 610 will move to state 2 and the PST 620 will reach leaf *b*, (0.5, 0.5). This is shown in Fig. 6C as the node 632 (labeled with {2, b}). Node 632 has a double border to indicate that the DSFA 610 has reached a final state. In a similar manner, this tree may be expanded into the future.

This can be used to estimate the waiting-time distribution. In order to estimate the probability of reaching a final state for the first time in k transitions, we first find all the paths starting from node 633, having length k, ending in a final state and without another final state at a level below k. In the example of Fig. 6C, if *k=1,* then the path from node 633 (i.e., {1, *aa*}) to node 632 (i.e. {2, b}) is such a path and its probability is 0.25. Thus, $P(W_{\{1,aa\}} = 1) = 0.25$. For *k=2,* nodes 631, 632, and 633 show a path that leads to a final state after 2 transitions. Its probability is 0.75 * 0.25 = 0.1875, since we just need to multiply the probabilities of the edges. If there were more such paths, it is necessary to add all their probabilities. Thus, $P(W_{\{1,aa\}} = 2) = 0.1875$.

It is obvious that this tree grows exponentially if it is looked deeper into the future. This cost can be significantly reduced by employing some simple optimizations. First, note in Fig. 6C, that the paths starting from nodes 632 and 632' (i.e., {2, b}) are grayed out. This indicates that these nodes need not be expanded, since they correspond to final states and any paths starting from them will not be used again. Only the first time $M_R$ reaches a final state is interested and not the second, third, etc. As a result, paths with more than one final state in Fig. 6C are not useful. With this optimization, an exact estimation of the waiting-time distribution can still be made. Another useful optimization tries to prune paths that should normally be expanded (i.e., no final state is involved). The intuition is that a path with a very low probability will not contribute significantly to the probabilities of the waiting-time distribution, even if it is expanded. Such paths thus can be pruned, accepting the risk that an approximate estimation of the waiting-time distribution will be received.

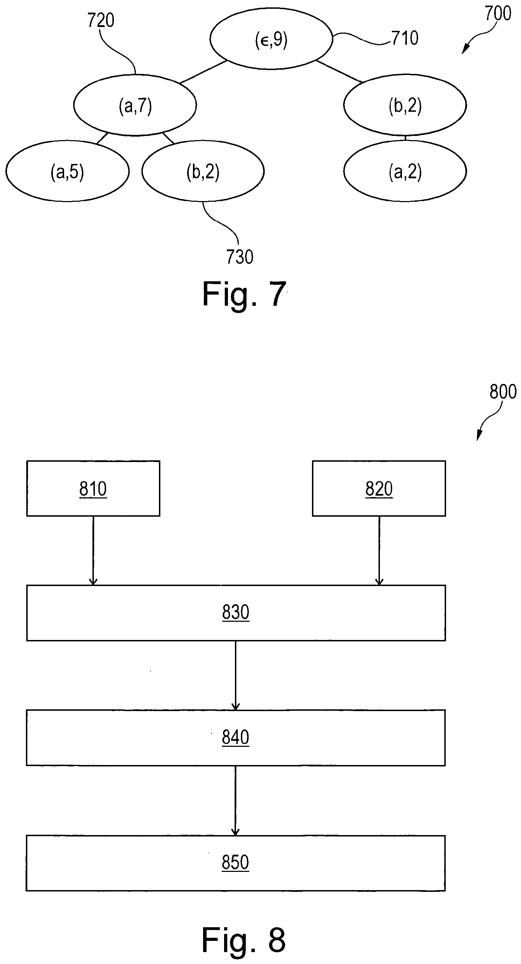

Fig. 7 shows an example of a counter suffix tree 700 with maximum depth m = 2 and S = *aaabaabaaa.*

The number of occurrences of the string $b \cdot a$ in S can be retrieved by first taking left child 720 of root node 710 and then right child 730 of the left child 720. The content of right child 730 is (b, 2) and indeed $b \cdot a$ occurs twice in S.

In Fig. 8, a method 800 for forecasting complex events in a complex event forecasting system is show. In step 810, a pattern defining a complex event is received. An event stream including a plurality of events upon which a forecast is to be based is received in step 820. Then, a probabilistic model is constructed (step 830) by means of an automaton derived from the received pattern and of a variable-order Markov model encoding statistical properties of at least a

**EP 3 955 176 B1**

portion of the received event stream which acts as a training dataset. The method then forecasts a complex event for the received event stream based on the probabilistic model in step 840.The forecasted complex event satisfies the received pattern. In step 850, outputting the forecasted complex event is output.

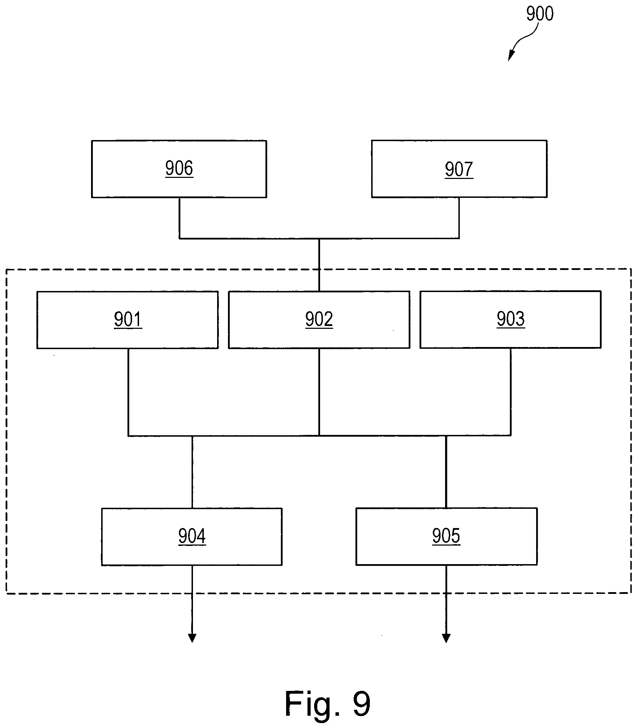

Fig. 9 depicts a diagrammatic representation of a data processing system 900 for implementing a method for forecasting complex events as described herein.

As shown in Fig. 9, the data processing system 900 includes one or more central processing units (CPU) or processors 901 coupled to one or more user input/output (I/O) devices 902 and memory devices 903. Examples of I/O devices 902 may include, but are not limited to, keyboards, displays, monitors, touch screens, printers, electronic pointing devices such as mice, trackballs, styluses, touch pads, or the like. Examples of memory devices 903 may include, but are not limited to, hard drives (HDs), magnetic disk drives, optical disk drives, magnetic cassettes, tape drives, flash memory cards, random access memories (RAMs), read-only memories (ROMs), smart cards, etc. The data processing system 900 is coupled to a display 906, an information device 907 and various peripheral devices (not shown), such as printers, plotters, speakers, etc. through the I/O devices 902. The data processing system 900 is also coupled to external computers or other devices through a network interface 904, a wireless transceiver 905, or other means that is coupled to a network such as a local area network (LAN), wide area network (WAN), or the Internet.

It will also be appreciated that one or more of the elements depicted in the drawings/figures can also be implemented in a more separated or integrated manner, or even removed or rendered as inoperable in certain cases, as is useful in accordance with a particular application.

As used herein, the terms "comprises", "comprising", "includes", "including", "has", "having", or any other variation thereof, are intended to cover a non-exclusive inclusion. For example, a method, process, product, article, or apparatus that comprises a list of elements is not necessarily limited only to those elements but may include other elements not expressly listed or inherent to such method, process, product, article, or apparatus.

Furthermore, the term "or" as used herein is generally intended to mean "and/or" unless otherwise indicated. For example, a condition A or B (as well as a condition A and/or B) is satisfied by any one of the following: A is true (or present) and B is false (or not present), A is false (or not present) and B is true (or present), and both A and B are true (or present).

As used herein, including the claims that follow, a term preceded by "a" or "an" (and "the" or "said" when antecedent basis is "a" or "an") includes both singular and plural of such term, unless clearly indicated within the claim otherwise (i.e., that the reference "a" or "an" clearly indicates only the singular or only the plural). Also, as used in the description herein and throughout the claims that follow, the meaning of "in" includes "in" and "on" unless the context clearly dictates otherwise.

**Claims**

1. A computer-implemented method for controlling a vehicle the method comprising the steps of:

   receiving (810) a symbolic regular expression defining a complex event;
   receiving (820), from sensors of a vehicle, an event stream including a plurality of events upon which a forecast is to be based, the plurality of events including location data from the vehicle;
   constructing (830) a probabilistic model by means of a deterministic symbolic finite automaton (410) derived from the symbolic regular expression and of a variable-order Markov model encoding statistical properties of at least a portion of the received event stream, the portion of the received event stream acting as a training dataset, each transition of the deterministic symbolic finite automaton (410) being equipped with a unary formula from an effective Boolean algebra, wherein the probabilistic model is constructed (830) by:

      constructing a streaming finite symbolic automaton based on and/or equivalent to the symbolic regular expression;
      constructing the deterministic symbolic finite automaton (410) based on and/or equivalent to the streaming finite symbolic automaton;
      using minterms of the deterministic symbolic finite automaton (410) and the portion of the received event stream to create and learn a probabilistic suffix automaton (320) as the variable-order Markov model, the probabilistic suffix automaton (320) encoding the statistical properties of the portion of the received event stream; and
      combining (240) the deterministic symbolic finite automaton (410) and the probabilistic suffix automaton (320) into a single automaton (420);

   forecasting (840), by the single automaton (420) embedding the deterministic symbolic finite automaton (410) and the probabilistic suffix automaton (320), a complex event for the received event stream by determining when the single automaton (420) is expected to reach one of its final states for the first time while continuously updating the variable-order Markov model in an online manner based on the received event stream, wherein the forecasted complex event matches the received symbolic regular expression; and

controlling the vehicle based on the forecasted complex event.

2. The method of claim 1, wherein the symbolic regular expression is a streaming symbolic regular expression.

3. The method of claim 1 or 2, further comprising calculating (250) waiting-time distributions from the single automaton (420) embedding the deterministic symbolic finite automaton (410) and the probabilistic suffix automaton (320).

4. The method of any of the preceding claims, wherein the method further comprises estimating a number of occurrences of the events in the received event stream by using a tree data structure (700), wherein each node (710, 720, 730) of the tree data structure (700) is a tuple which comprises a symbol from an alphabet of the received event stream and a counter, and wherein the counter of every node (710, 720, 730) is equal to the sum of the counters of children of the node (710, 720, 730).

5. The method of any of the preceding claims, wherein the method performs regression complex event forecasting to forecast when the complex event is expected to occur and/or classification complex event forecasting to forecast whether or not a complex event will occur within a predetermined future window.

6. The method of any of the preceding claims, wherein the method is distributed.

7. A data processing system comprising a processor (901) configured to perform the method of any of claims 1-6.

8. A computer-readable storage medium comprising instructions which, when executed by a computer (900), cause the computer (900) to carry out the method of any of claims 1-6.

**Patentansprüche**

1. Computer-implementiertes Verfahren zur Steuerung eines Fahrzeugs, wobei das Verfahren die folgenden Schritte umfasst:

Empfangen (810) eines symbolischen regulären Ausdrucks, der ein komplexes Ereignis definiert;
Empfangen (820) eines Ereignisstroms von Sensoren eines Fahrzeugs, der eine Vielzahl von Ereignissen enthält, auf denen eine Vorhersage basieren soll, wobei die Vielzahl von Ereignissen Standortdaten des Fahrzeugs enthält;
Konstruieren (830) eines Wahrscheinlichkeitsmodells mittels eines deterministischen symbolischen endlichen Automaten (410), der von dem symbolischen regulären Ausdruck abgeleitet ist, und eines Markov-Modells variabler Ordnung, das statistische Eigenschaften von mindestens einem Teil des empfangenen Ereignisstroms kodiert, wobei der Teil des empfangenen Ereignisstroms als Trainingsdatensatz dient, wobei jeder Übergang des deterministischen symbolischen endlichen Automaten (410) mit einer unären Formel aus einer effektiven Booleschen Algebra ausgestattet ist, wobei das Wahrscheinlichkeitsmodell konstruiert wird (830) durch:

Konstruieren eines strömenden endlichen symbolischen Automaten basierend auf und/oder äquivalent zu dem symbolischen regulären Ausdruck;
Konstruieren des deterministischen symbolischen endlichen Automaten (410) basierend auf und/oder äquivalent zu dem strömenden endlichen symbolischen Automaten;
Verwenden von Mintermen des deterministischen symbolischen endlichen Automaten (410) und des Teils des empfangenen Ereignisstroms, um einen probabilistischen Suffix-Automaten (320) als Markov-Modell variabler Ordnung zu erzeugen und anzulernen, wobei der probabilistische Suffix-Automat (320) die statistischen Eigenschaften des Teils des empfangenen Ereignisstroms kodiert; und
Kombinieren (240) des deterministischen symbolischen endlichen Automaten (410) und des probabilistischen Suffix-Automaten (320) zu einem einzigen Automaten (420);

Vorhersagen (840) eines komplexen Ereignisses für den empfangenen Ereignisstrom durch den einzigen Automaten (420), der den deterministischen symbolischen endlichen Automaten (410) und den probabilistischen Suffix-Automaten (320) einbettet, indem bestimmt wird, wann der einzige Automat (420) voraussichtlich einen seiner Endzustände zum ersten Mal erreicht, während das Markov-Modell variabler Ordnung auf der Grundlage des empfangenen Ereignisstroms kontinuierlich online aktualisiert wird, wobei das vorhergesagte komplexe Ereignis mit dem empfangenen symbolischen regulären Ausdruck übereinstimmt; und
Steuern des Fahrzeugs auf der Grundlage des vorhergesagten komplexen Ereignisses.

2. Verfahren nach Anspruch 1, wobei der symbolische reguläre Ausdruck ein strömender symbolischer regulärer Ausdruck ist.

3. Verfahren nach Anspruch 1 oder 2, das ferner umfasst: Berechnen (250) von Wartezeitverteilungen aus dem einzigen Automaten (420), der den deterministischen symbolischen endlichen Automaten (410) und den probabilistischen Suffix-Automaten (320) einbettet.

4. Verfahren nach einem der vorhergehenden Ansprüche, wobei das Verfahren ferner Schätzen einer Anzahl des Auftretens der Ereignisse in dem empfangenen Ereignisstrom unter Verwendung einer Baumdatenstruktur (700) umfasst, wobei jeder Knoten (710, 720, 730) der Baumdatenstruktur (700) ein Tupel ist, das ein Symbol aus einem Alphabet des empfangenen Ereignisstroms und einen Zähler umfasst, und wobei der Zähler eines jeden Knotens (710, 720, 730) gleich der Summe der Zähler der Kinder des Knotens (710, 720, 730) ist.

5. Verfahren nach einem der vorhergehenden Ansprüche, wobei das Verfahren eine regressive komplexe Ereignisvorhersage durchführt, um vorherzusagen, wann das komplexe Ereignis voraussichtlich eintreten wird und/oder eine klassifizierende komplexe Ereignisvorhersage, um vorherzusagen, ob ein komplexes Ereignis innerhalb eines vorbestimmten Zukunftsfensters eintreten wird oder nicht.

6. Verfahren nach einem der vorhergehenden Ansprüche, wobei das Verfahren verteilt ist.

7. Datenverarbeitungssystem mit einem Prozessor (901), der so konfiguriert ist, dass er das Verfahren nach einem der Ansprüche 1-6 durchführt.

8. Computerlesbares Speichermedium mit Anweisungen, die, wenn sie von einem Computer (900) ausgeführt werden, den Computer (900) veranlassen, das Verfahren nach einem der Ansprüche 1-6 auszuführen.

## Revendications

1. Procédé mis en oeuvre par ordinateur pour la commande d'un véhicule, le procédé comprenant les étapes de :

la réception (810) d'une expression régulière symbolique définissant un événement complexe ;
la réception (820), en provenance de capteurs d'un véhicule, d'un flux d'événements incluant une pluralité d'événements sur lesquels une prévision doit être basée, la pluralité d'événements incluant des données d'emplacement provenant du véhicule ;
la construction (830) d'un modèle probabiliste au moyen d'un automate fini symbolique déterministe (410) dérivé de l'expression régulière symbolique et d'un modèle de Markov d'ordre variable codant des propriétés statistiques d'au moins une partie du flux d'événements reçu, la partie du flux d'événements reçu servant d'ensemble de données d'entraînement, chaque transition de l'automate fini symbolique déterministe (410) étant dotée d'une formule unaire provenant d'une algèbre booléenne effective, dans lequel le modèle probabiliste est construit (830) par :

la construction d'un automate symbolique fini en flux basé sur et/ou équivalent à l'expression régulière symbolique ;
la construction de l'automate fini symbolique déterministe (410) basé sur et/ou équivalent à l'automate symbolique fini en flux ;
l'utilisation de mintermes de l'automate fini symbolique déterministe (410) et de la partie du flux d'événements reçu pour créer et apprendre un automate à suffixe probabiliste (320) en tant que modèle de Markov d'ordre variable, l'automate à suffixe probabiliste (320) codant les propriétés statistiques de la partie du flux d'événements reçu ; et
la combinaison (240) de l'automate fini symbolique déterministe (410) et de l'automate à suffixe probabiliste (320) en un unique automate (420) ;

la prévision (840), par l'unique automate (420) incorporant l'automate fini symbolique déterministe (410) et l'automate à suffixe probabiliste (320), d'un événement complexe pour le flux d'événements reçu par la détermination du moment auquel il est prévu que l'unique automate (420) atteigne l'un de ses états finaux pour la première fois tout en mettant à jour en continu le modèle de Markov d'ordre variable d'une manière en ligne sur la base du flux d'événements reçu, dans lequel l'événement complexe prévu concorde avec l'expression régulière symbolique reçue ; et

la commande du véhicule sur la base de l'événement complexe prévu.

2. Procédé selon la revendication 1, dans lequel l'expression régulière symbolique est une expression régulière symbolique en flux.

3. Procédé selon la revendication 1 ou 2, comprenant en outre le calcul (250) de distributions de temps d'attente par l'unique automate (420) incorporant l'automate fini symbolique déterministe (410) et l'automate à suffixe probabiliste (320).

4. Procédé selon l'une quelconque des revendications précédentes, dans lequel le procédé comprend en outre l'estimation d'un nombre d'occurrences des événements dans le flux d'événements reçu en utilisant une structure de données arborescente (700), dans lequel chaque noeud (710, 720, 730) de la structure de données arborescente (700) est un tuple qui comprend un symbole provenant d'un alphabet du flux d'événements reçu et un compteur, et dans lequel le compteur de chaque noeud (710, 720, 730) est égal à la somme des compteurs d'enfants du noeud (710, 720, 730).

5. Procédé selon l'une quelconque des revendications précédentes, dans lequel le procédé réalise une prévision d'événement complexe par régression pour prédire le moment auquel il est prévu que l'événement complexe survienne et/ou une prévision d'événement complexe par classification pour prédire si un événement complexe surviendra ou non au sein d'une fenêtre future prédéterminée.

6. Procédé selon l'une quelconque des revendications précédentes, dans lequel le procédé est distribué.

7. Système de traitement de données comprenant un processeur (901) configuré pour réaliser le procédé selon l'une quelconque des revendications 1 à 6.

8. Support de stockage lisible par ordinateur comprenant des instructions qui, lors de leur exécution par un ordinateur (900), amènent l'ordinateur (900) à mettre en oeuvre le procédé selon l'une quelconque des revendications 1 à 6.

Fig. 1

EP 3 955 176 B1

EP 3 955 176 B1

200

INPUT

Deterministic
Symbolic
Finite
Automaton
(t minterms)

INPUT

m,ε,n

210

INPUT—m, training
stream $S_{1...k}$ → Counter Suffix Tree

Counter
Suffix
Tree

220

Counter Suffix Tree
to Prediction
Suffix Tree

Prediction
Suffix Tree

230

Prediction Suffix Tree
to Probabilistic Suffix
Automaton

Prediction Suffix Tree

INPUT —————— h →

Prediction Suffix Tree to
waiting-time distributions

230'

Probabilistic
Suffix Au-
tomaton $M_S$

260

INPUT — $θ_{fc}$,h →

Waiting-time distributions
to intervals

Forecast
intervals

↓

OUTPUT

Waiting-time
distributions

Deterministic Symbolic
Finite Automaton $M_R$
(t minterms)

Waiting-time
distributions

Embedding to waiting-time
distributions

250

Embed-
ding

Probabilistic Suffix Au-
tomaton to Embedding

240

# Fig. 2

Fig. 3A

Fig. 3B

Fig. 4A

Fig. 4B

510

Fig. 5A

520

Fig. 5B

Fig. 6A

Fig. 6B

Fig. 6C

720

710 — 700

($\epsilon$,9)

(a,7)

(b,2)

(a,5)     (b,2)     (a,2)

730

# Fig. 7

800

| 810 | | 820 |

| 830 |

| 840 |

| 850 |

# Fig. 8

900

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2560106 A

**Non-patent literature cited in the description**

- **ELIAS ALEVIZOS.** *Event Forecasting with Pattern Markov Chains*

- **ELIAS ALEVIZOS.** *Symbolic Automata with Memory: a Computational Model for Complex Event Processing*